# FASCICULE DE BREVET EUROPEEN

(11) **EP 4 060 156 B1**
(45) Date de publication et mention de la délivrance du brevet: **07.02.2024**
(21) Numéro de dépôt: 22020089.3
(22) Date de dépôt: 03.03.2022
(51) Int. Cl.: E05D 15/16, E05D 15/24, F16B 37/04

(54) **ENSEMBLE POUR STRUCTURE POUR PORTE SECTIONNELLE**
ANORDNUNG FÜR STRUKTUR EINES SEKTIONALTORS
ASSEMBLY FOR STRUCTURE FOR A SECTIONAL DOOR

(30) Priorité: 19.03.2021 BE 202100025; 15.04.2021 BE 202100034
(43) Date de publication de la demande: 21.09.2022
(73) Titulaire: Sieuw, Nathalie, 7912 Saint-Sauveur (BE)
(72) Inventeur: Sieuw, Nathalie, 7912 Saint-Sauveur (BE)
(74) Mandataire: Powis de Tenbossche, Roland

(56) Documents cités:
- EP-A1- 1 426 634
- EP-A2- 1 780 363
- DE-B3-102016 117 336
- DE-U1- 8 529 610
- DE-U1-202012 100 985

## Description

L'invention a pour objet un ensemble pour structure , en particulier de guidage pour porte sectionnelle, en particulier de garage.

Les structures de guidage de porte sectionnelle comportent un ou des rails de guidage pour des roues ou galets de panneaux articulés de la porte.

Ces structures de guidage sont souvent associées à des éléments distincts, tels que profilés de support, cornières, pièces de liaison, éléments support, goulottes, etc., avec au moins un des éléments présentant une ou une série de fenêtres allongées. Les éléments sont attachés l'un à l'autre avec une vis et un écrou, la tige de la vis étant engagée dans la fenêtre allongée, de manière à permettre un positionnement des éléments entre eux par un déplacement de la tige de la vis dans la fenêtre allongée.

Ce type de fixation des éléments entre eux est particulièrement difficile lorsque les éléments se situent à près de 2m au-dessus du niveau du sol.

De plus, même en utilisant des rondelles anti rotation du côté de la tête de la vis, une faible rotation côté écrou est encore possible, ce qui peut alors induire un mouvement de translation relative des éléments entre eux, en particulier lors de vibrations générées lors d'opérations d'ouverture ou de fermeture de la porte.

Ce type de fixation nécessite de plus de l'habileté pour l'ouvrier, car ce dernier doit à la fois maintenir en position l'écrou et positionner la tige d'une vis en face de l'écrou, le tout avec interposition d'un rail. L'accès à l'écrou pour une pince ou une clé est souvent très compliqué, voire impossible, ce qui rend les opérations de serrage ou de desserrage difficiles. Ceci peut alors induire une fixation de pièces entre elles non adéquate ou non suffisante, pour assurer une solidarisation correcte à long terme d'éléments entre eux, et ce malgré des vibrations suite à des opérations d'ouverture et de fermeture de la porte.

L'invention vise à remédier à cet inconvénient, en utilisant un moyen de liaison permettant un effet de blocage automatique d'une partie par rapport au rail, pour permettre un serrage adéquat de la pièce à solidariser sur le rail. Un tel serrage adéquat permet de maintenir des pièces sur un rail avec un positionnement adéquat.

Par le document DE 85 29 610 U1, on connaît un ensemble comprenant une pièce présentant un passage pour la tige d'une vis associée à un pied, et un rail en C présentant une ouverture longitudinale adaptée pour recevoir le pied. Le pied présente un passage fileté présentant une protubérance tournée vers la tête de la vis assurant un couple de serrage important lors du vissage ou dévissage de la tige. L'insertion du pied dans le rail par la fenêtre allongée n'est pas aisée, car la largeur du pied est constante. Le pied présente une protubérance cylindrique associée à deux butées destinées à prendre appui sur les bords de la fenêtre du rail lors d'une opération de serrage ou de déserrage. Puisque l'effort de serrage et de déserrage est plus important, les butées exercent un effort important sur les bords de la fenêtre, avec un risque d'endommager les bords de la fenêtre.

Par le document EP 1426634, on connaît un système de fixation comprenant une vis avec une tige filetée associée à un pied destiné à s'étendre dans le creux d'un rail. La tête de la vis est associé à un moyen à cliquet coopérant avec un évidement de la pièce à fixer sur le rail. Ce système à cliquet comporte un moyen ressort tendant à écarter la tête de la vis de la face avant de la pièce à fixer. Pour placer le pied derrière les retours de la fenêtre allongée du rail, l'opérateur doit excercer un effort à l'encontre du moyen ressort, pour rapprocher la vis de la face avant de la pièce à fixer. Une fois ce mouvement de poussée opéré, un mouvement de rotation permet au pied de prendre appui sur les retours de la fenêtre. Le système de cliquet sert de moyen pour s'opposer à un mouvement de déserrage de la vis, permettant ainsi seulement un mouvement de serrage.

L'invention a ainsi pour objet un ensemble selon la revendication 1, pour structure ( en particulier de guidage) de porte sectionnelle, en particulier de garage, la porte sectionnelle étant avantageusement motorisée et soumise à des efforts de traction d'un ou de ressorts.

Ledit ensemble selon l'invention comprend :
(a) un rail ( avantageusement partiellement en C, avec des retours) métallique (1) (avantageusement un rail de guidage pour roues ou galets de panneaux articulés) avec au moins (*) une âme (1A) (avantageusement associée à une série de fenêtres allongées (1AF) avec une largeur de passage (LP) prédéfinie et une longueur au moins 2 fois supérieure à la largeur de passage (LP) prédéfinie), et (*) des ailes (1B,1C) attachées à ladite âme (1A), ledit rail métallique (1) définissant une chambre intérieure (2) ouverte avec une face intérieur (2l) présentant une ouverture longitudinale ou une fenêtre allongée (1F) présentant une largeur de passage (LP) et une longueur de passage au moins deux fois supérieure à ladite largeur de passage (LP),
   dans lequel ledit rail métallique (1) est éventuellement associé à un profilé métallique (6) adapté pour coulisser dans la chambre intérieure (2), ledit profilé métallique (6) présentant une paroi (6l) adaptée pour prendre appui sur ladite face intérieure (2l) de la chambre intérieure (2) présentant l'ouverture longitudinale ou la fenêtre allongée (1F), ladite paroi (6l) du profilé (6) présentant au moins une fenêtre allongée (6F) présentant une largeur de passage (LP) et une longueur de passage au moins deux fois supérieure à la largeur de passage (LP);
(b) une pièce métallique (4) à solidariser audit rail métallique (1) , éventuellement en association avec ledit profilé métallique éventuel (6), ladite pièce métallique (40) présentant un passage (40) pour une tige métallique (50), ladite pièce métallique (40) en position solidarisée prenant appui, avec interposition éventuelle d'une pièce intermédiaire, sur ledit rail métallique (1) avec une force de maintien minimale , et
(c) un moyen de liaison métallique (5) entre la pièce métallique (4) et une partie dudit rail métallique (1), éventuellement en association avec ledit profilé métallique (6) s'étendant dans la chambre intérieure (2), pour solidariser au moins ladite pièce métallique (4) à un endroit prédéterminé dudit rail métallique (1), ledit moyen de liaison métallique (5) comprenant au moins un moyen de liaison particulier avec un système autobloquant pour sa partie située dans la chambre intérieure (2) du rail au moins partiellement en C (1). Ceci facilite grandement les étapes de montage de bâti de porte de garage, permettant un ajustement précis (par translation ) de pièces entre elles, assurant même une solidarisation améliorée, résistant aux vibrations et chocs provoqués par l'utilisation de la porte.

Le moyen de liaison métallique (5) comprend au moins :
(a) une première pièce (5B) présentant un premier corps (5BC) portant une tige métallique (50) avec au moins une portion filetée (50F) , ladite tige métallique (50) s'étendant dans le passage (40) de la pièce métallique à solidariser (4), ladite tige présentant un axe central (B-B) (axe correspondant à l'axe de rotation de la tige), et
(b) une deuxième pièce (5A) présentant un passage fileté (51) recevant au moins partiellement la portion filetée (50F) de ladite tige métallique (50) de ladite première pièce (5B), ladite tige métallique (50) présentant une extrémité libre s'étendant hors du passage fileté (51).

Au moins une portion de la pièce métallique (4) adjacente de son passage (40) s'étend entre ledit premier corps (5BC) portant la tige métallique (50) de la première pièce (5B) et ledit passage filetée (51) de la deuxième pièce (5A).

Lesdites première et deuxième pièces (5A, 5B) sont montées mobiles entre elles au moins dans la direction de l'axe central B-B par un mouvement de rotation relative entre elles autour de l'axe central de rotation (B-B) pour les déplacer :
(*) lors d'un mouvement relatif de rotation autour de l'axe B-B dans un sens de desserrage de la position de serrage du moyen de liaison (5) vers une position de non serrage du moyen de liaison (5), dans laquelle le moyen de liaison métallique (5) et la pièce métallique (4) peuvent au moins subir un mouvement de translation par rapport au rail métallique (1), et
(*) lors d'un mouvement relatif de rotation autour de l'axe B-B dans un sens de serrage entre une position de non serrage du moyen de liaison (5), dans laquelle le moyen de liaison métallique (5) et la pièce métallique (4) peuvent au moins subir un mouvement de translation par rapport au rail métallique (1) et la position de serrage du moyen de liaison (5).

Une (5B/5A) des pièces de la paire de pièces (5A, 5B) coopérant l'une avec l'autre présente un pied (52) avec une face d'appui (52A) destinée à prendre appui sur la face intérieure (2l) de la chambre intérieure (2) présentant l'ouverture longitudinale ou la fenêtre allongée (1F) ou sur la paroi (6l) du profilé (6), tandis que l'autre (5A/5B) des pièces de la paire de pièces (5A,5B) présente une face d'appui (5AI) destinée à prendre appui sur une face de la pièce métallique (4) en position de serrage dudit moyen de liaison (5).

Ledit pied (52) est profilé pour permettre son introduction dans la chambre intérieure ouverte (2) via l'ouverture longitudinale ou la fenêtre allongée (1F) et via la fenêtre allongée (6F) de l'éventuel profilé métallique (6), ledit pied (52) ayant: (a) une largeur maximale (LAM) inférieure à la largeur de passage (LP) de la fenêtre allongée (6F) du profilé métallique (6) éventuel (au travers de laquelle le pied doit être introduit), et (b) une longueur minimale (LOM) correspondant au moins à 1,7 fois la largeur de passage (LP) de la fenêtre allongée considérée dans laquelle le pied (52)est introduit. Ce pied va servir de point d'appui situé à l'intérieur de la chambre intérieure. Ce pied d'appui se trouvera ainsi à l'intérieur de la chambre (2), c'est-à-dire dans une zone protégée.
ladite une (5B/5A) des pièces de la paire de pièces (5A,5B) comportant un ou des moyens de butée (53,54) limitant le mouvement de rotation dudit pied (52) dans la chambre intérieure ouverte (2) entre une première position de maintien pour laquelle le ou les moyens de butée (53,54) est/sont en contact avec au moins une première partie du rail métallique (1) ou avec au moins une première partie du profilé métallique (6) éventuel ou avec au moins un bord de l'ouverture longitudinale ou fenêtre allongée (1F, 6F, 1AF) du rail métallique (1) et/ou du proflé métallique (6) éventuel, pour s'opposer à une rotation de ladite une (5B) desdites pièces de la paire (5A,5B) lors d'un mouvement relatif de rotation entre la première pièce (5B) et la deuxième pièce (5A) de ladite paire dans le sens de serrage du moyen de liaison (5), et avec au moins une deuxième partie du rail métallique (1) ou avec une deuxième partie du profilé métallique (6) éventuel ou avec au moins un bord de l'ouverture longitudinale ou fenêtre allongée (1F, 6F, 1AF) du rail métallique (1) et/ou du proflé métallique (6) éventuel, pour s'opposer à une rotation de ladite une (5B) desdites pièces de la paire (5A,5B) lors d'un mouvement relatif de rotation entre la première pièce et la deuxième pièce de la paire (5A,5B) dans le sens de desserrage du moyen de liaison (5). Ce ou ces moyens de butée servent de moyen de blocage de la butée par rapport au rail en C, éventuellement après une rotation de 45 à 135°, en particulier d'environ 90°, ce qui permet à l'opérateur de ne pas devoir se soucier de maintenir en position la butée ou le pied en position lors d'une opération de serrage ou de desserrage. Ceci permet également d'assure un pré maintien des pièces entre elles, avant leur solidarisation. Ceci permet également en utilisant un outil de vissage automatique avec réglage de couple de serrage, d'être certain que le serrage du moyen de liaison est réalisé avec le couple de serrage prédéfini. Grâce à ce moyen de blocage ou butée, il est possible de s'assurer de la position correcte de la butée par rapport au rail ou un profilé ou une fenêtre.

Le filet d'au moins une partie de la portion filetée (50F) de la tige (50) de la première pièce (5B) et le filet d'au moins une partie du passage filetée (51) de la deuxième pièce (5A) sont adaptés pour assurer une force de serrage minimale entre eux. Ceci permet ainsi un mouvement de rotation des deux pièces (5A,5B) pour amener le moyen de butée en contact avec au moins une première partie du rail ou une première partie du profilé (6) ou avec au moins un bord d'une fenêtre allongée (1F, 6F, 1AF), et d'amener la deuxième pièce en position auto bloquante par rapport au rail ou profilé métallique (6).

L'extrémité libre de la tige (50) est munie d'un moyen pour maintenir ladite extrémité libre de la tige (50) hors du passage fileté (51) lors d'un mouvement de rotation relatif entre lesdites première et deuxième pièces (5B,5A) dans le sens de déserrage du moyen de liaison métallique (50). Ceci permet à l'opérateur de s'assurer d'une liaison entre la tige 50 et la deuxième pièce (5A), lors du placement de la tige dans la chambre intérieure 2 du rail métallique (1).

La portion filetée (50F) de la tige (50) présente :
(a) une première partie filetée tournée vers l'extrémité libre de la tige (50) qui en contact avec le filet du passage (51) de la deuxième pièce (5A) assure une force de serrage minimale ou un couple de serrage minimal de sorte qu'une rotation de la première pièce (5B) sur un secteur donné entraîne une rotation de la deuxième pièce (5A) sur le même secteur donné tant que la deuxième pièce (5A) ne touche pas contre au moins une première partie du rail métallique (1) ou avec au moins une première partie du profilé métallique (6) éventuel ou avec au moins un bord de l'ouverture longitudinale ou fenêtre allongée (1F, 6F, 1AF) du rail métallique (1) ou du profilé métallique (6), et
(b) une deuxième partie filetée éloignée de l'extrémité libre de la tige (50) par rapport à la première partie filetée, ladite deuxième partie filetée présentant un filet adapté de manière à ce que le filet de la deuxième partie en contact avec le filet du passage (51) assure une force de serrage ou un couple de serrage inférieur à ladite force de serrage minimale ou ledit couple de serrage minimal, au moins tant que la pièce métallique (4) n'est pas adjacente de sa position solidarisée avec le moyen de liaison métallique (5).

Ceci facilite le placement de la deuxième pièce dans la chambre intérieure (2) du rail métallique (1), le pivotement de la deuxième pièce (5A) dans la chambre intérieure (2), tout en limitant l'effort des butées (53,54) sur une partie du rail métallique (1) ou surune partie du profilé métallique (6) ou sur un bord d'une fenêtre, lors d'une opération de serrage ou de déserrage du moyen de liaison (5).

Avantageusement, le filet de la deuxième partie en contact avec le filet du passage (51) assure une force de serrage ou un couple de serrage inférieur à 50%, avantageusement inférieur à 25%, de préférence inférieur à 10% de ladite force de serrage minimale ou ledit couple de serrage minimal. Ceci permet de limiter l'effort des butées lors d'une opération de serrage et de déserrage, tout en permettant de maintenir la deuxième pièce (5A) dans une position s'opposant à son retrait hors de la chambre intérieure (2).

De préférence, la tige métallique (50) présente au voisinage de son extrémité libre, une portion creuse au moins tant que la pièce métallique (4) n'est pas adjacente de sa position solidarisée avec le moyen de liaison métallique (5), ladite portion creuse présentant une déformation s'opposant au passage de l'extrémité libre de la tige métallique au travers du passage fileté (51) .

En position de serrage, le moyen de butée est en contact avec la première partie du rail en C ou la deuxième partie du rail métallique (1) ou avec la première partie du profilé métallique (6) ou la deuxième partie du profilé métallique (6) ou avec au moins un bord d'une fenêtre longitudinale ou allongée (1F, 6F, 1AF), ce qui permet d'assurer un meilleur maintien de la position de la pièce à solidariser par rapport au rail métallique, et ce malgré d'éventuelles vibrations.

Le moyen de liaison (5) permet également un montage très rapide, un pré maintien et une liaison parfaite, avec le couple de serrage voulu de la pièce à solidariser par rapport au rail. L'opérateur peut facilement placer la pièce à solidariser à l'endroit voulu, et la maintenir en position pendant qu'il manipule l'outil de serrage, avec un couple de serrage minimal prédéterminé.

Avantageusement le filet de portion filetée (50F) de la tige 50 présente (a) une première partie qui en contact avec le filet du creux ou passage (51) assure une force de serrage minimale de sorte qu'une rotation de la première pièce (5B) sur un secteur donné entraîne une rotation de la deuxième pièce (5A) sur le même secteur donné tant que deuxième pièce (5A) ne bute pas contre une surface d'un rail (1) ou profilé (6), et (b) une deuxième partie qui en contact avec le filet du passage (51) n'assure pas la force de serrage minimale. Lorsque les filets en contact n'assurent pas cette force de serrage minimale, une rotation relative entre la première pièce (5B) et la deuxième pièce (5A) est possible. Cette rotation relative peut être telle qu'elle soit libre, de sorte que par l'effet de la gravité, la deuxième pièce est apte à pivoter dans une position pour laquelle la deuxième pièce s'oppose à son passage par la fenêtre

Des détails et particularités avantageuses de formes de réalisation sont donnés ci-après :
- le pied (52) a une forme allongée avec deux bords (55A,55B) parallèles écartés l'un de l'autre d'une distance (LAM) correspondant à 0,9 à 0,99 fois la largeur de passage (LP) de l'ouverture longitudinale ou de fenêtre allongée (1F,6F,1AF) du rail métallique (1) et du profilé métallique (6) éventuel.
- le passage fileté (51) du pied (52) est excentré ou le centre de gravité du pied (52) est excentré par rapport à l'axe central B-B de la tige (50), et donc du passage fileté (51).
- ladite autre (5A/5B) des pièces de la paire (5A,5B) présente :
   (*) une tête (5AT) avec un creux ou fente ou un contour (5AT1,5ATC) adapté pour coopérer avec la tête d'un outil de vissage, et
   (*) la face d'appui (5AI) présentant des rainures ou protubérances de blocage (56), pour s'opposer à un desserrage avec un effort inférieur à un effort minimal prédéterminé de ladite autre (5A/5B) des pièces de la paire (5A, 5B) lorsque celle-ci prend appui sur une face (41) de la pièce métallique (4) prenant appui sur ledit rail métallique (1). Ces protubérances 56 prenant appui sur une surface de la pièce métallique 4 assure un couple de serrage s'opposant au desserrage, qui vient s'ajouter au couple de serrage dû aux filets.
- la pièce métallique (4) présente des moyens de positionnement (45,45') de la pièce métallique (4) par rapport au rail métallique (1), en particulier par rapport à la fenêtre allongée (1AF,1F) de celui-ci. De tels moyens sont avantageux pour centrer le moyen de liaison ou la tige par rapport à une fenêtre dont la largeur est supérieure au diamètre de la tige (50). Ces moyens de positionnement peuvent également coopérer pour accroître la solidarisation de la pièce (4) avec le rail métallique (1), et éviter une rotation de de la pièce métallique (4) lors d'une opération de serrage du moyen de liaison (5).
- le moyen de liaison métallique (5) est monté sur la pièce métallique (4) formant un sous-ensemble unique dont le moyen de liaison métallique (5) ne peut pas être séparé de la pièce métallique (4). Ceci facilite le maintien en position du moyen de liaison 5 et la pièce métallique 4 au rail métallique 1.
- la tige (50) présente une portion non filetée engagée dans le passage (40) de la pièce métallique (4), ladite portion non filetée présentant une section circulaire correspondant sensiblement à la section du passage (40) de la pièce métallique (4), pour éviter sensiblement tout flottement latéral de ladite portion non filetée (50NF) de la tige (50) par rapport audit passage (40) de la pièce métallique (4). Cette absence de flottement permet un placement du pied 52 au travers d'une fenêtre longitudinale ou allongée de manière plus aisée.
- le moyen de butée (53,54) comporte :
   (*) une partie plate (53A,54A) destinée à prendre en une première position dite de maintien appui sur une face plane intérieure de la chambre intérieure (2) du rail métallique (1) ou sur une surface plane intérieure du profilé (6) ou sur un bord longitudinal d'une fenêtre allongée (1F,1AF,6F) du rail métallique (1) ou du profilé métallique éventuel (6), et
   (*) une partie courbe (53B,54B) adaptée lors d'un mouvement de rotation dans un sens de serrage pour glisser le long de ladite face plane intérieure de la chambre intérieure (2) du rail en C (1) ou le long de la face plane intérieure du profilé (6) ou le long du bord longitudinal d'une fenêtre allongée (1AF,1F,6F) du rail métallique ou du profilé métallique éventuel (6),
      dans lequel une portion de la partie plate (53A,54A) adjacente de ladite partie courbe (53B,54B) forme un système type cliquet ou came ou cale avec une force de blocage lors de la rotation de ladite une des pièces de la paire (5A,5B) dans le sens de serrage pour maintenir la partie plate (53A,54A) contre la face plane du rail en C (1) ou le bord d'une fenêtre allongée (1AF,1F,6F), et s'opposer au non maintien de la partie plate (53A,54A) contre la face plane du rail métallique (1) ou le bord d'une fenêtre allongée (1AF,1F,6F), et s'opposer à une rotation de ladite une (5B/5A) des pièces de la paire (5A,5B) dans le sens de desserrage en appliquant une force de rotation inférieure à la force de blocage. Ce système de blocage sert avantageusement de cale ou de coin pour s'opposer à des mouvements relatifs entre le rail métallique et la pièce métallique 4, une fois la pièce métallique 4 en position solidarisée.
- Le moyen de butée peut être centré par rapport à l'axe de rotation B-B de la tige 50 ou peut être décentré par rapport audit axe, présentant alors par rapport à l'axe de rotation une première portion et une deuxième portion plus longue que la première portion. Le moyen de butée peut également avoir un centre de gravité excentré par rapport à l'axe de rotation B-B.
- La pièce métallique (4) présente une partie associée à un ou des inserts (47) pour une ou des vis et/ou à une ou des douilles (48) par fluo perçage pour une ou des vis. Cette partie associée à un ou des inserts (47) et/ou une ou des douilles (48) est par exemple une cornière ou une équerre qui sert par exemple de moyen pour relier le rail métallique à un plat ou profilé de support, ou pour associer deux rails parallèles à une ou des traverses.
- la tige (50) de la première pièce (5B) du moyen de liaison (5) est solidaire du pied (52), tandis que la deuxième pièce (5A) du moyen de liaison (5) présente un passage fileté (51) pour recevoir une portion filetée (50F) de la tige (50), la tige (50) et/ou le creux ou passage fileté (51) étant associé à un moyen (57) empêchant la tige (50) de sortir complètement hors du creux ou passage (51F) de la deuxième pièce (5B) du moyen de liaison (50).

- la tige (50) avec une portion filetée (50F) de la première pièce (5B) est solidaire d'une tête (5AT) avec un creux ou fente ou contour (5AT1,5ATC) adapté pour coopérer avec la tête d'un outil de vissage, tandis que la deuxième pièce (5A) du moyen de liaison (5) est formée par un pied plat allongé (52) présentant une ouverture filetée (51) adaptée pour coopérer avec la portion filetée (50F) de la tige (50), l'extrémité libre (58) de la tige (50) étant déformée pour former une butée (57) empêchant la tige (50) de sortir complètement hors du passage (51) de la deuxième pièce (5B) du moyen de liaison.
- le rail métallique (1) est un rail en C dont les ailes (1B,1C) présentent chacune un retour (1BR,1CR) définissant entre leurs bords libres une fenêtre allongée longitudinale (1F),
   tandis que l'ensemble comprend un profilé métallique (6) de section transversale adaptée pour coulisser dans la chambre intérieure (2) du rail métallique (1), ledit profilé (6) présentant une largeur supérieure à la largeur de passage (LP) de la fenêtre allongée longitudinale (1F) du rail métallique (1), ledit profilé (6) présentant :
   (*) deux portions longitudinales d'appui (61,62) adaptées pour prendre appui respectivement sur les faces intérieures des retours (1BR,1CR) des ailes (1B,1C) du rail métallique (1), et
   (*) une portion intermédiaire (63) située entre lesdites portions longitudinales d'appui (61,62) et présentant une série de fenêtres allongées (6F) longitudinales de largeur inférieure à la largeur de la fenêtre allongée longitudinale (1F) du rail métallique (1), lesdites fenêtres allongées longitudinales (6F) du profilé (6) étant adaptées pour s'étendre en regard de la fenêtre allongée (1F) du rail métallique (1) lorsque les portions longitudinales d'appui (61,62) prennent appui sur les faces intérieures des retours (1BR,1CR) des ailes du rail métallique (1).

Dans cette forme de réalisation, la pièce métallique (4) présente au moins deux portions d'appui (48A,48B) adaptées pour venir en contact avec les faces extérieures des retours (1BR,1CR) et une portion intermédiaire (49) présentant le passage (40) pour la tige (50) du moyen de liaison (5).

Avantageusement dans cette forme de réalisation,
soit la première pièce (5B) du moyen de liaison (5) comporte la tige métallique (50) qui porte le pied (52) adapté pour passer au travers d'une fenêtre allongée (6F) du profilé métallique (6), ladite tige (50) présentant au voisinage du pied (52) au moins un moyen de butée (53) adapté pour venir en contact avec un bord de la fenêtre allongée longitudinale (6F) du profilé métallique (6) pour assurer une position relative du pied (52) par rapport au profilé métallique (6) lors d'un mouvement de rotation de la deuxième pièce (5A), ou
soit la deuxième pièce (5A) du moyen de liaison (5) comporte le pied (52) adapté pour passer au travers d'une fenêtre allongée (6F) du profilé métallique (6), ledit pied (52) présentant au moins un moyen de butée (53) adapté pour venir en contact avec une face intérieure du rail métallique (1) ou du profilé métallique (6) pour assurer une position relative du pied (52) par rapport au profilé métallique (6) lors d'un mouvement de rotation de la première pièce (5B).

Dans cette forme de réalisation, de préférence, la pièce métallique (4) présente au moins un moyen de positionnement (45) de la pièce métallique (4) par rapport à l'ouverture longitudinale ou la fenêtre longitudinale (1F) du rail (1), au moins un moyen de positionnement (45) étant avantageusement adapté pour s'étendre dans ladite ouverture longitudinale ou fenêtre allongée longitudinale (1F) du rail métallique (1) lorsque les portions d'appui (48A,48B) de la pièce à solidariser (4) sont en contact avec les faces extérieures des retours (1BR,1CR) du rail (1).

Des particularités et détails de l'invention ressortiront de la description détaillée suivante dans laquelle il est fait référence aux dessins ci-annexés montrant des formes de réalisation avantageuses de l'invention, données à titre d'exemples uniquement.

Dans ces figures,
- la figure 1 est une vue d'un rail en C à solidariser avec une cornière 4, position non solidarisée au moyen d'un liaison 50,
- la figure 2 est une vue d'un rail en C à solidariser avec une cornière 4, position solida risée,
- la figure 3 est une vue en coupe du rail de la figure 2 (plan III),
- la figure 4 est une vue en coupe du rail de la figure 2 (plan IV),
- la figure 5 est une vue de face de la pièce métallique de la figure 1;
- la figure 6 est une vue en coupe le long de la ligne VI-VI de la pièce de la figure 5 ou 7 (le pli de la cornière n'étant représenté que partiellement),
- la figure 7 est une de côté de la pièce de la figure 5,
- la figure 8 est une vue en perspective arrière de la pièce de la figure 5,

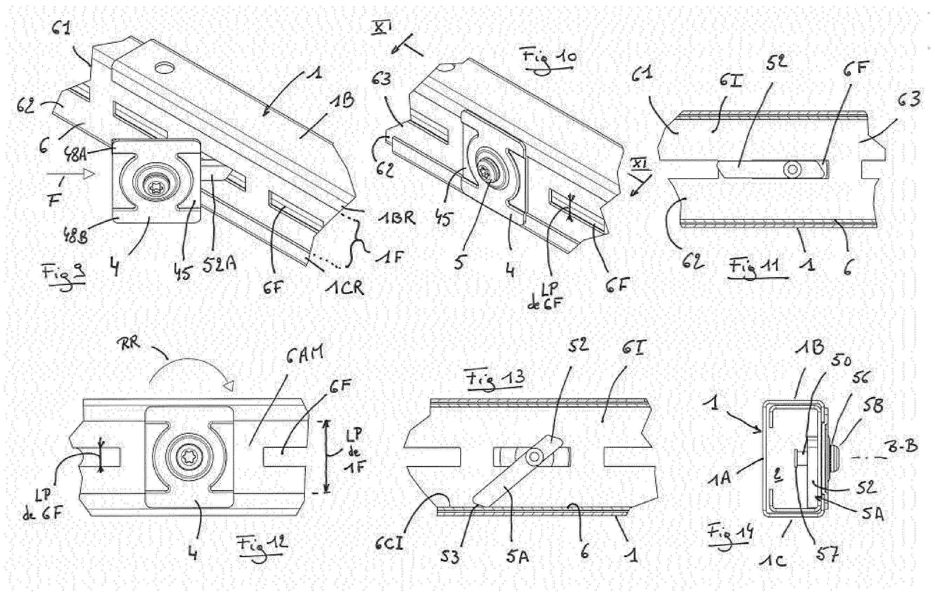

- les figures 9 à 14 sont des vues d'une autre forme de réalisation d'un ensemble suivant l'invention, la figure 9 montrant en perspective l'introduction du pied 52 dans la feneêtre 6F du profilé, en passant par la fenêtre longitudinale 1F du rail en C (1), la figure 10 montrant le positionnement de la pièce (4) contre les retours du rail en C (1), la figure 11 étant une vue en coupe de la figure 10 le long du plan XI-XI; la figure 12 étant une vue avant montrant la rotation du moyen de liaison (5) pour solidariser la pièce 4 contre le rail en C (1), la figure 13 étant une vue en coupe montrant la position du pied (52) après rotation du moyen de liaison (5), et la figure 14 étant une vue en coupe montrant la pièce 4 solidarisée sur le rail en C (1).
- la figure 15 est une vue en coupe d'un moyen de liaison 5 similaire à celui montré aux figures 9 à 14, pour solidariser la pièce 4 avec moyen de positionnement sur le rail avec interposition d'un profilé 6 présentant une gorge longitudinale 63G dont le fond 63 présente une série de fenêtres 6F adaptées pour le passage du pied 52. A la figure 15 le moyen de liaison associé à la pièce 4 est en position de non liaison.
- la figure 16 est une vue similaire à celle de la figure 15, mais avec le moyen de liaison 5 maintenant en position la pièce 4 sur le rail, ainsi que la position du profilé 6 par rapport au rail 1.
- la figure 17 est une vue de côté d'une autre forme de réalisation d'un moyen de liaison selon l'invention;
- la figure 18 est une vue partiellement en coupe (la pièce B étant montrée en coupe) du moyen de liaison représenté à la figure 17;
- la figure 19 est une vue en coupe du moyen de la figure 17 ou le long de la ligne XXVI-XXVI;
- la figure 27 montre un moyen de liaison du type représenté à la figure 17, préassocié à un deuxième élément (par exemple du type porte roulette), avant sa fixation sur un premier élément (ici support charnière entre deux panneaux de porte sectionnelle),

Dans ces figures, des signes de références identiques désignent des pièces ou éléments identiques ou ayant une même fonction.

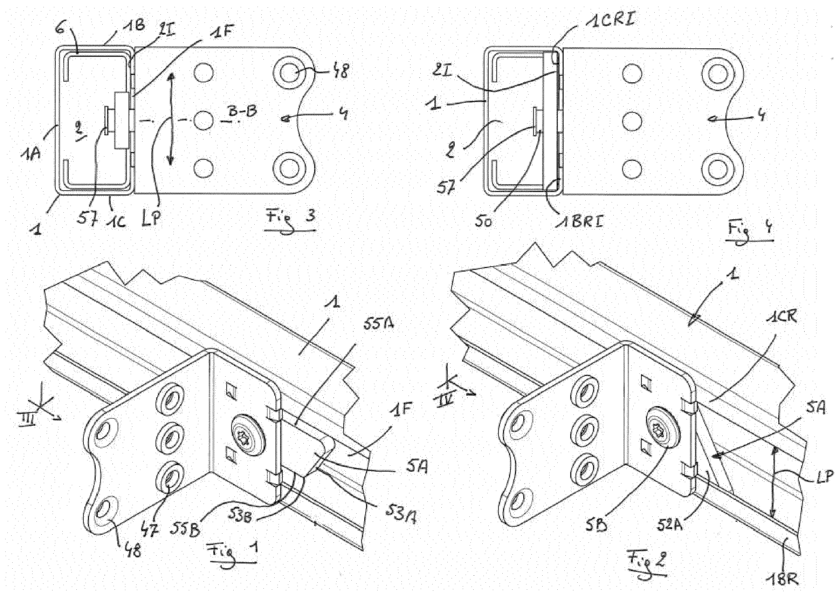

Une forme de réalisation d'un ensemble préféré selon l'invention est représentée aux figures 1 à 8.

Le rail métallique en C (1) comporte des ailes (1B,1C) avec des retours et présente une fente longitudinales (1F).

La pièce métallique (4) est un connecteur d'équerre pour relier le rail métallique en C (1) à un autre profilé.

Le moyen de liaison métallique (5) comporte au moins une paire de pièces coopérant l'une à l'autre comprenant:
(a) une première pièce (5B) présentant une tige métallique (50) avec au moins une portion filetée (50F) adaptée pour s'étendre dans le passage (40) de la pièce métallique à solidariser (4), ladite tige filetée (50) présentant un axe central B-B, et
(b) une deuxième pièce (5A) présentant un passage fileté (51) adapté pour recevoir au moins partiellement la portion filetée de ladite tige métallique (50) de ladite première pièce (5B).

Lesdites première et deuxième pièces (5A,5B) sont mobiles entre elles par un mouvement de rotation relative entre elles autour de l'axe central de rotation (B-B) pour les déplacer (*) lors d'un mouvement relatif de rotation autour de l'axe B-B dans un sens de desserrage d'une position de serrage solidarisant la pièce à solidariser sur une partie du rail en C (1) vers une position de non serrage, dans laquelle le moyen de liaison métallique (5) et la pièce métallique (4) à solidariser peuvent au moins subir un mouvement de translation par rapport au rail en C (1), et (*) lors d'un mouvement relatif de rotation autour de l'axe B-B dans un sens de serrage entre une position de non serrage, dans laquelle le moyen de liaison métallique (5) et la pièce métallique à solidariser (4) peuvent au moins subir un mouvement de translation par rapport au rail en C (1) et la position de serrage solidarisant la pièce métallique à solidariser (4) sur une partie du rail en C (1).

La deuxième pièce (5A) présente le pied (52) avec une face d'appui (52A) destiné à prendre appui sur les faces intérieures (1BRI,1CRI) des retours (1BR,1CR) des ailes (1B,1C) du rail en C (1), tandis que l'autre pièce (5B) présente une face d'appui (5AI) destinée à prendre appui sur une face de la pièce métallique à solidariser (4) audit rail en C (1).

Ledit pied (52) étant profilé pour permettre son introduction dans la chambre intérieure ouverte (2) via la fenêtre allongée (1F) définie entre les retours (1BR,1CR) des ailes (1B,1C), ledit pied (52) ayant une largeur maximale (LAM) inférieure à la largeur de passage (LP) de la ou des fenêtres allongées en considération et une longueur minimale (LOM) correspondant au moins à 1,7 fois la largeur de passage (LP).
ladite une (5A) des pièces de la paire de pièces (5A,5B) comporte des moyens de butée (53,54) limitant le mouvement de rotation dudit pied (52) dans la chambre intérieure ouverte (2) entre une première position de maintien pour laquelle les moyens de butée (53,54) sont en contact respectivement avec la face intérieure d'une des ailes 1B,1C du rail en C, pour s'opposer à une rotation de ladite une (5A) desdites pièces de la paire (5A,5B) lors d'un mouvement relatif de rotation entre la première pièce (5A) et la deuxième pièce (5B) de ladite paire dans un sens de serrage, et avec au moins une autre partie des ailes du rail en C (1) pour s'opposer à une rotation de ladite une (5A) desdites pièces de la paire (5A,5B) lors d'un mouvement relatif de rotation entre la première pièce et la deuxième pièce de la paire (5A,5B) dans un sens de desserrage.

La portion filetée (50F) de la tige (50) présente au moins :
(a) une première partie filetée (50FA) tournée vers l'extrémité libre (57) de la tige (50) qui en contact avec le filet du passage (51) de la deuxième pièce (5A) assure une force de serrage minimale ou un couple de serrage minimal de sorte qu'une rotation de la première pièce (5B) sur un secteur donné entraîne une rotation de la deuxième pièce (5A) sur le même secteur donné tant que la deuxième pièce (5A) ne touche pas contre au moins une première partie du rail métallique (1) ou avec au moins une première partie du profilé métallique (6) éventuel ou avec au moins un bord de l'ouverture longitudinale ou fenêtre allongée (1F, 6F, 1AF) du rail métallique (1) ou du profilé métallique (6), et
(b) une deuxième partie filetée (50FB) éloignée de l'extrémité libre de la tige (50) par rapport à la première partie filetée, ladite deuxième partie filetée présentant un filet adapté de manière à ce que le filet de la deuxième partie en contact avec le filet du passage (51) assure une force de serrage ou un couple de serrage inférieur à ladite force de serrage minimale ou ledit couple de serrage minimal, au moins tant que la pièce métallique (4) n'est pas adjacente de sa position solidarisée avec le moyen de liaison métallique (5).

Ceci permet, lors d'une opération de serrage, de limiter l'effort des butées 53,54 sur des faces des ailes du rail en C (1). Ceci permet également de faciliter le délacement dans la direction B-B du plat 52 ders les retours 18R des ailes 1B,1C du rail (1).

Le filet de la portion filetée (50F) de la tige (50) de la première pièce (5B) proche du bourellet 57 et le filet du creux ou passage filetée (51) de la deuxième pièce (5A) sont adaptés pour assurer une force de serrage minimale entre eux, de manière à permettre que, jusqu'au contact du ou d'au moins un moyen de butée (53,54) de ladite une (5A) des pièces de la paire (5A,5B) avec la face intérieure des ailes, un mouvement de rotation de ladite autre (5A/5B) des pièces de la paire (5A,5B) entraîne une rotation de ladite une (5B/5A) des pièces de la paire (5A,5B).

Les moyens de butée (53,54) de ladite une (5A) des pièces de la paire (5A,5B) sont adaptés pour que lorsque le ou le au moins un moyen de butée (53,54) est en contact avec la première partie du rail en C ou la deuxième partie du rail en C (1), les première pièce (5A) et deuxième pièce (5B) de la paire (5A,5B) peuvent subir entre elles un mouvement de translation relatif dans une direction parallèle à l'axe de rotation (B-B), lors d'une rotation dans le sens de serrage et lors d'une rotation dans le sens de desserrage.

La tige (50) de la première pièce (5B) du moyen de liaison (5) est solidaire du pied (52), tandis que la deuxième pièce (5A) du moyen de liaison (5) présente un creux ou un passage fileté (51) pour recevoir une portion filetée (50F) de la tige (50), la tige (50) étant associé à un moyen (57) empêchant la tige (50) de sortir complètement hors du creux ou passage (51F) de la deuxième pièce (5B) du moyen de liaison (50). Ce moyen est par exemple obtenu par une déformation plastique de l'extrémité libre de la tige 50, pour former un bourrelet 57.

La tige 50 est associée à une tête (5AT) adaptée pour coopérer avec un outil de vissage.

Le pied 52 présente deux bords parallèles 55A,55B reliés entre eux par des parties plates inclinées 53A,54A (inclinées par rapport aux bords parallèles 55A,55B. Le moyen de butée (53,54) du pied 52 comporte :
(*) une partie plate (53A,54A) destinée à prendre en une première position dite de maintien appui sur une face plane intérieure de la chambre intérieure (2) du rail en C (1) ou sur un bord longitudinal d'une fenêtre allongée (1F,1AF,6F) du rail en C ou du profilé éventuel (6), et
(*) une partie courbe (53B,54B) adaptée lors d'un mouvement de rotation dans un sens de serrage pour glisser le long de ladite face plane intérieure de la chambre intérieure ou le long du bord longitudinal d'une fenêtre allongée (1AF,1F,6F) du rail en C ou du profilé (6),
dans lequel une portion de la partie plate (53A,54A) adjacente de ladite partie courbe (53B,54B) forme un système type cliquet ou came avec une force de blocage lors de la rotation de ladite une des pièces de la paire (5A,5B) dans le sens de serrage pour maintenir la partie plate (53A,54A) contre la face plane d'une aile du rail en C (1), et s'opposer au non maintien de la partie plate (53A,54A) contre la face plane d'une aile du rail en C (1), et s'opposer à une rotation de ladite une (5B/5A) des pièces de la paire (5A,5B) dans le sens de desserrage en appliquant une force de rotation inférieure à la force de blocage.

La pièce métallique à solidariser (4) présente une partie associée à un ou des inserts (47) pour une ou des vis et/ou à une ou des douilles (48) par fluo perçage pour une ou des vis.

Pour faciliter le positionnement de l'équerre (4) par rapport à la fente longitudinale (1F) du rail (1), la pièce à solidariser (4) présente des déformations 45 servant de moyens de positionnement, ces déformations 45 définissant des protubérances adaptées pour venir en contact avec les bords libres des retours des ailes du rail en C (1).

Les figures 9 à 14 sont des vues d'une autre forme de réalisation d'un ensemble suivant l'invention similaire à celle de la figure 1.

Dans cette forme de réalisation, le rail en C (1), le profilé (6), la pièce à solidariser (4) sont similaires à ceux de la forme de réalisation de la figure 1. Le moyen de liaison (5) est quant à lui fort analogue à celui utilisé dans la forme de réalisation de la figure 21.

Le moyen de liaison (5) comporte:
- une première pièce (5B) solidaire de la tige 50 se terminant par la butée 57, cette première pièce (5B) étant identique à celle de la forme de réalisation de la figure 21;
- une deuxième pièce (5A) sous la forme d'un pied (52) avec un passage fileté (51) (voir figure 26 pour cette référence) , le passage fileté étant excentré par rapport au pied (52).

Dans cette forme de réalisation, le filet de portion filetée (50F) de la tige (50) présente :
(a) une première partie (adjacente de la butée 57, partie proche de l'extrémité libre de la tige 50) qui en contact avec le filet du creux ou passage (51) assure une force de serrage minimale de sorte qu'une rotation de la première pièce (5B) sur un secteur donné entraîne une rotation de la deuxième pièce (5A) sur le même secteur donné tant que la deuxième pièce (5A) ne bute pas contre une surface d'un rail (1) ou une surface d'un profilé (6), et
(b) une deuxième partie qui en contact avec le filet du creux ou passage (51) n'assure pas la force de serrage minimale, permettant ainsi une rotation relative entre la première pièce (5B) et la deuxième pièce (5A). Cette rotation relative est une quasi rotation relative libre pour cette deuxième partie.

Le passage filetée (51) est excentré par rapport au pied (52) pour que le centre de gravité du pied (52) soit écarté de l'axe B-B de la tige (50), de manière à assurer par rapport à l'axe B-B un couple dû à la gravité. D'autres moyens sont possibles pour que le centre de gravité du pied soit excentré par rapport à l'axe B-B du passage pour la tige (50). Lorsque la force de serrage ou le couple de serrage entre les filets est quasi nul (pour la deuxième partie de la tige 50), la gravité permet au pied de rester dans une position avec son extrémité éloignée (53) (formant une butée) en contact avec une face intérieure (6CI) pur profilé (6). Ceci permet alors que lors de l'opération de serrage, l'opérateur est assuré que le pied s'étend dans la position désirée.

Dans la forme de réalisation des figures 9 à 14, le pied (52) a une longueur supérieure à la longueur de la fenêtre (6F) et une largeur inférieure à la largeur (LP) de la fenêtre (6F). Pour introduire le pied (52) dans la fenêtre (6F), on place le pied dans un plan incliné par rapport au plan des fenêtres (6F), pour introduire en premier lieu l'extrémité (53) du pied (52) dans la fenêtre (6F). (Mouvement indiqué par la flèche F) Pour cette introduction, le pied (52) se trouve adjacent de l'extrémité (57) de la tige (50), dans une partie où le filet de la tige (50) assurer une force ou un couple de serrage minimal, de sorte que toute rotation de la tête (51AT) de la tige (50) entraîne une rotation identique du pied (52). L'opérateur n'a alors qu'à tenir la tête (51AT) pour positionner dans l'axe longitudinal des fenêtres (6F) pour introduire le pied (52) dans la chambre intérieure (2)via la fenêtre (6F). Après avoir positionné une partie du pied à l'intérieur de la chambre (2) (ce qui assure que le pied (52) est dans une position permettant son introduction complète dans la chambre), par un léger mouvement de pivotement de la pièce à solidariser (4), tout le pied est amené à s'étendre dans la chambre intérieure (2). (voir figure 11)
Par effet de la gravité le pied (52) avec la tige (50) pivote pour que son extrémité éloignée (53) s'étende vers le bas (Rotation RR) et touche une face inférieure intérieure du profilé (6). Dans cette position, le moyen de liaison 5 assure un maintien de la pièce métallique 4 à solidariser sur le profilé (6) et sur le rail métallique en C (1). Ceci permet à l'opérateur un placement adéquat des pièces entre elles sans devoir se soucier à devoir tenir en main la pièce à solidariser (4) pour éviter qu'elle ne tombe.

Lorsque la butée (53) est en contact avec une face du profilé (6), il est possible de visser la tige (50) sur le passage fileté, avec d'abord un couple de serrage supérieur au couple de serrage minimal entre les filets avec le pied adjacent à l'extrémité libre de la tige, pour amener ensuite le pied (52) à coopérer avec la deuxième partie de la tige filetée (50). Ceci facilite alors le déplacement axial de la butée vers la face intérieure de l'âme (6AM) du profilé (6) pour assurer une solidarisation adéquate de la pièce 4 sur le rail métallique (1).

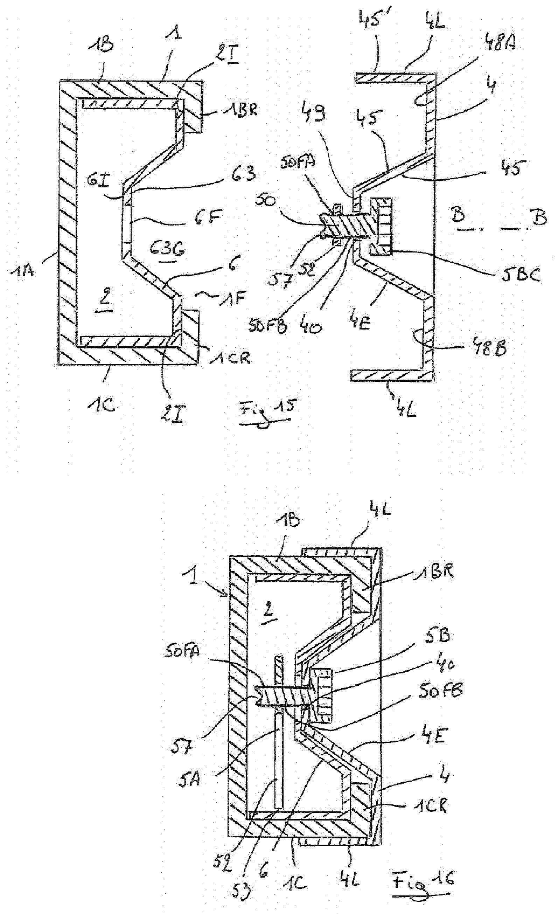

les figures 15 et 16 montrent en coupe le moyen de liaison 5 se présentant sous la forme d'une vis 5 avec une tige filetée 50 associée à une pièce métallique 4 et au pied 52. L'extrémité libre 57 de la tige filetée 50 est déformée pour former un bourellet. Ainsi la pièce métallique 4, la vis 5B avec sa tige 50, et le pied 52 forment un sous ensemble ou une sous unité dont les éléments le composant ne peuvent pas être séparés. la pièce 4 présente des ailes 4L destinées à recouvrir une portion du rail 1. Ces ailes 4L servent ainsi de moyens de positionnement 45' de la pièce 4 par rapport au rail 1. la pièce 4 présente une déformation centrale 4E formant une cuvette définissant la portion intermédiaire 49. Cette déformation centrale 4E forme un moyen de positionnement de la cuvette 4E par rapport à la gorge 63G du profilé 6. Ceci permet de positionner la tige 50 en regard de la fenêtre 6F du profilé 6.

La pièce métallique à solidariser (4) présente au moins deux portions d'appui (48A,48B) adapté pour venir en contact avec les faces extérieures des retours (1BR,1CR) et une portion intermédiaire (49) présentant le passage (40) pour la tige (50) du moyen de liaison (5).

Le moyen de positionnement principal (45) de la pièce métallique à solidariser (4) est formé par un enfoncement (4E) dont le fond (49) présente le passage (40) pour la tige (50) du moyen de liaison (5), ledit enfoncement (4E) présentant au moins une face inclinée adaptée pour coopérer avec des flancs inclinés (63F) de la gorge (63G) lors de l'introduction de l'enfoncement (4E) dans la gorge (63G) du profilé métallique (6) en assurant au moins des points de contacts entre la au moins une face inclinée (45) de l'enfoncement (4E) et des flancs inclinés de la gorge (63G).

La pièce métallique à solidariser (4) présente des plis formant des ailes (4L) adaptés pour coiffer au moins partiellement les ailes (1B,1C) du rail au moins partiellement en C métallique (1). Ces plis (4L) servent de moyen de positionnement (45') de la pièce 4 sur le rail en C (1).

Le profilé 6 présente le long du fond de sa gorge 63G une série de fenêtres 6F dont les dimensions sont adaptées pour permettre le passage du pied 52, pour que ledit pied s'étende dans la chambre intérieure 2 du rail 1. lors du serrage de la vis 5, le pied est déplacé vers la face 6I du profilé 6, tandis que des portions longitudinales du profilé 6 prennent appui sur la face intéieure 2I de la chambre définie par les retours 1BR et 1CR.

Puisque le pied 52 est excentré par rapport à l'axe B-B de la tige filetée 50, dès que le pied est placé dans la chambre intérieure 2 à travers une fenêtre 6F du profilé 6, le pied pivotera par gravité dans une position pour laquelle le pied s'oppose au retrait du pied hors de la chambre intérieure (2).

La fenêtre 6F présentent des bords longitudinaux qui serviront d'appui à la tige 50 lors d'un pivotement par gravité du pied.
lorsque le pied se trouve dans la zone SOFA de la tige 50, le pivotement naturel du pied par gravité entraînera une rotation de la tige 50 et donc de la vis.

Lorsque le pied 52 se trouve dans la zone 50FB de la tige, une rotation de la tige 50 n'entraîne avantageusement pas de rotation du pied, ce dernier restant dans une position dictée par la gravité. l'opération de vissage est ainsi facilitée. On limite pendant cette opération l'effort de frottement d'une face de butée 53 du pied 52 sur une face intérieure du profilé 6, lors du déplacement de cette face de butée 53 dans la direction de l'axe B-B.

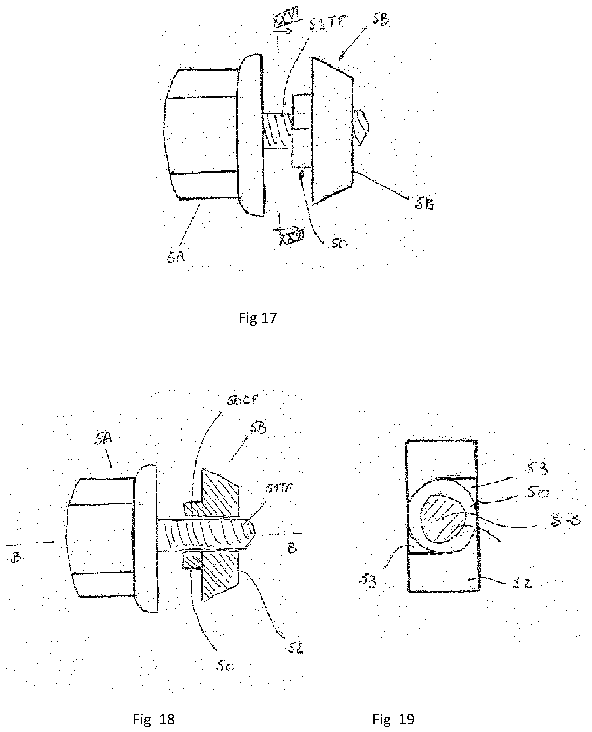

Les figures 17 à 19 montrent une autre forme de réalisation d'un moyen de liaison selon l'invention.

Ce moyen de liaison est caractérisé en ce que :
- la première pièce (5B) présentant une tige métallique (50) avec un creux ou passage fileté (50CF) de diamètre (D50) avec un axe central (B-B) et portant un pied (52), ledit pied (52) présentant une largeur qui correspond à sa largeur maximale égale à sensiblement au diamètre (D50) de la tige (50) et une longueur minimale égale dans le cas présent à environ 1,7 à 2 fois le diamètre (D50) de la tige (Le diamètre D50 est déterminé sur base des sections sensiblement circulaires (hors butée 53) de la tige 50),
- la deuxième pièce (5A) présente une tige filetée (51TF) adaptée pour s'engager dans le creux ou passage fileté (50CF) de la première portion (50F) de la première pièce (5B);
- Au moins une partie du creux ou passage fileté (50CF) avec un axe central (B-B) de la tige (50) de la première pièce (5B), et

au moins une partie de la tige filetée (51TF) de la deuxième pièce (5A)
sont adaptées pour assurer un couple de serrage minimal entre elles, de manière à ne permettre une rotation relative entre lesdites première et deuxième pièces (5A,5B) qu'en appliquant un couple de rotation supérieur au couple de serrage minimal lorsque ladite au moins une partie du creux ou passage fileté (50CF) avec un axe central (B-B) de la tige (50) de la première pièce (5B) et au moins une partie de la tige filetée (51TF) de la deuxième pièce (5A) assurent ledit couple de serrage minimal.

Les butées 53 présentent chacunes deux faces planes perpendiculaires entre elles et tangentes à la face sensiblement cylindrique de la tige 50, lesdites butées étant diamétralement opposées par rapport à l'axe central B-B.

Le moyen de liaison (5) selon la figure 17 peut être associé ou préassocié à undit deuxième élément (4) présentant deux faces opposées (401,402) et un passage (4CP) recevant au moins une partie de la tige métallique (50) de la première pièce (5B) portant le pied (52). Ledit pied (52) s'étendant du côté d'une première face opposée (402), tandis que la tête (5AT) s'étend du côté de l'autre face opposée (401). Ledit pied (52) et ladite tête (5AT) ont chacun une forme adaptée pour s'opposer à leur passage au travers dudit passage (40) dudit deuxième élément. Le moyen de liaison et ledit deuxième élément forme alors une unité pour sa fixation sur le premier élément, après introduction du pied (52) dans la fenêtre allongée dudit premier élément ( 1 et/ou 6).

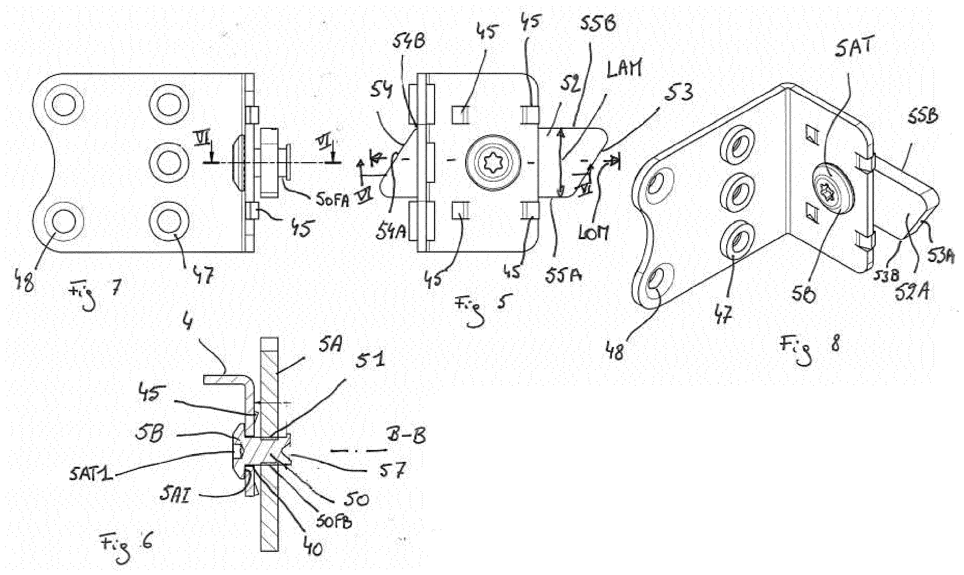

Des formes de réalisation de moyens de liaison associés ou préassociés à un deuxième élément (4) sont montrées aux figures 7 et 9. Dans ces formes de réalisation, le passage 40 de la pièce 4 à solidariser à un élément support ou rail 1,6 présente un diamètre correspondant sensiblement à la distance séparant les deux bords extrêmes des butées parallèles à l'axe central B-B pour des butées symétriques.

Dans la forme de réalisation de la figure 17, ledit moyen de liaison est dans une position pour laquelle au moins une partie de la première portion (50F) avec un filet extérieur (50FE) ou un creux ou passage fileté (50CF) avec un axe central (B-B) de la tige (50) de la première pièce (5B) et au moins une partie du creux ou passage filetée (51F) ou de la tige filetée (51TF) de la deuxième pièce (5A) assurent un couple de serrage minimal entre elles, de manière à ne permettre une rotation relative entre lesdites première et deuxième pièces (5A,5B) qu'en appliquant un couple de rotation supérieur au couple de serrage minimal lorsque ladite au moins une partie de la première portion (50F) avec un filet extérieur (50FE) ou un creux ou passage fileté (50CF) avec un axe central (B-B) de la tige (50) de la première pièce (5B) et au moins une partie du creux ou passage filetée (51F) ou de la tige filetée (51TF) de la deuxième pièce (5A) assurent ledit couple de serrage minimal.

## Revendications

1. Ensemble pour structure de porte sectionnelle, en particulier pour structure de guidage de porte sectionnelle, en particulier de garage, ledit ensemble comprenant :
(a) un rail métallique (1) avec au moins une âme (1A), et des ailes (1B,1C) attachées à ladite âme (1A), ledit rail métallique (1) définissant une chambre intérieure (2) ouverte avec une face intérieure (2I) présentant une ouverture longitudinale ou une fenêtre allongée (1F) présentant une largeur de passage (LP) et une longueur de passage au moins deux fois supérieure à la largeur de passage (LP),
dans lequel ledit rail métallique (1) est éventuellement associé à un profilé métallique (6) adapté pour coulisser dans la chambre intérieure (2), ledit profilé métallique (6) présentant une paroi (6l) adaptée pour prendre appui sur ladite face intérieure (2I) de la chambre intérieure (2) présentant l'ouverture longitudinale ou la fenêtre allongée (1F), ladite paroi (6l) du profilé (6) présentant au moins une fenêtre allongée (6F) présentant une largeur de passage (LP) et une longueur de passage au moins deux fois supérieure à la largeur de passage (LP) ;
(b) une pièce métallique (4) à solidariser audit rail métallique (1), éventuellement en association avec ledit profilé métallique éventuel (6), ladite pièce métallique (40) présentant un passage (40) pour une tige métallique (50), ladite pièce métallique (40) en position solidarisée prenant appui, avec interposition éventuelle d'une pièce intermédiaire, sur ledit rail métallique (1) avec une force de maintien minimale, et
(c) un moyen de liaison métallique (5) entre la pièce métallique (4) et une partie dudit rail métallique (1), éventuellement en association avec ledit profilé métallique (6) s'étendant dans la chambre intérieure (2), ledit moyen de liaison métallique (5) en position de serrage étant adapté pour solidariser au moins ladite pièce métallique (4) à un endroit prédéterminé dudit rail métallique (1), ledit moyen de liaison métallique (5) comprenant au moins :
(a) une première pièce (5B) présentant un premier corps (5BC) portant une tige métallique (50) avec au moins une portion filetée (50F), ladite tige métallique (50) s'étendant dans le passage (40) de la pièce métallique à solidariser (4), ladite tige métallique (50) présentant un axe central B-B, et
(b) une deuxième pièce (5A) présentant un passage fileté (51) recevant au moins une partie de la portion filetée de ladite tige métallique (50) de ladite première pièce (5B), ladite tige métallique (50) présentant une extrémité libre s'étendant hors du passage fileté (51),
dans lequel au moins une portion de la pièce métallique (4) adjacente de son passage (40) s'étend entre ledit premier corps (5BC) (qui est par exemple la tête d'une vis) portant la tige métallique (50) de la première pièce (5B) et ledit passage filetée (51) de la deuxième pièce (5A)
lesdites première et deuxième pièces (5A,5B) étant mobiles entre elles au moins dans la direction de l'axe central B-B par un mouvement de rotation relatif entre elles autour de l'axe central de rotation (B-B) pour les déplacer lors d'un mouvement relatif de rotation autour de l'axe B-B dans un sens de desserrage de la position de serrage du moyen de liaison (5) vers une position de non serrage du moyen de liaison (5), dans laquelle le moyen de liaison métallique (5) et la pièce métallique (4) peuvent au moins subir un mouvement de translation par rapport au rail métallique (1), et lors d'un mouvement relatif de rotation autour de l'axe B-B dans un sens de serrage entre une position de non serrage du moyen de liaison métallique (5), dans laquelle le moyen de liaison métallique (5) et la pièce métallique (4) peuvent au moins subir un mouvement de translation par rapport au rail métallique (1) et la position de serrage du moyen de liaison (5),
dans lequel une (5B/5A) des pièces de la paire de pièces (5A, 5B) coopérant l'une avec l'autre présente un pied (52) avec une face d'appui (52A) destinée à prendre appui sur la face intérieure (2I) de la chambre intérieure (2) présentant l'ouverture longitudinale ou la fenêtre allongée (1F) ou sur la paroi (6l) du profilé (6), tandis que l'autre (5A/5B) des pièces de la paire de pièces (5A,5B) présente une face d'appui (5AI) destinée à prendre appui sur une face de la pièce métallique (4) en position de serrage dudit moyen de liaison (5),
dans lequel ledit pied (52) est profilé pour permettre son introduction dans la chambre intérieure ouverte (2) via l'ouverture longitudinale ou la fenêtre allongée (1F) et via la fenêtre allongée (6F) de l'éventuel profilé métallique (6), ledit pied (52) ayant (a) une largeur maximale (LAM) inférieure à la largeur de passage (LP) de l'ouverture longitudinale ou fenêtre allongée (1F) du rail métallique (1) et inférieure à la largeur de passage de la fenêtres allongée (6F) du profilé métallique (6) éventuel, et (b) une longueur minimale (LOM) correspondant au moins à 1,7 fois la largeur de passage (LP),
ladite une (5B/5A) des pièces de la paire de pièces (5A,5B) comportant un ou des moyens de butée (53,54) limitant le mouvement de rotation dudit pied (52) dans la chambre intérieure ouverte (2) entre une première position de maintien pour laquelle le ou les moyens de butée (53,54) est/sont en contact avec au moins une première partie du rail métallique (1) ou avec au moins une première partie du profilé métallique (6) éventuel ou avec au moins un bord de l'ouverture longitudinale ou fenêtre allongée (1F, 6F, 1AF) du rail métallique (1) et/ou du proflé métallique (6) éventuel, pour s'opposer à une rotation de ladite une (5B) desdites pièces de la paire (5A,5B) lors d'un mouvement relatif de rotation entre la première pièce (5B) et la deuxième pièce (5A) de ladite paire dans le sens de serrage du moyen de liaison (5), et avec au moins une deuxième partie du rail métallique (1) ou avec une deuxième partie du profilé métallique (6) éventuel ou avec au moins un bord de l'ouverture longitudinale ou fenêtre allongée (1F, 6F, 1AF) du rail métallique (1) et/ou du proflé métallique (6) éventuel, pour s'opposer à une rotation de ladite une (5B) desdites pièces de la paire (5A,5B) lors d'un mouvement relatif de rotation entre la première pièce et la deuxième pièce de la paire (5A,5B) dans le sens de desserrage du moyen de liaison (5),
dans lequel le filet d'au moins une partie de la portion filetée (50F) de la tige (50) de la première pièce (5B) et le filet d'au moins une partie du passage filetée (51) de la deuxième pièce (5A) sont adaptés pour assurer une force de serrage minimale entre eux,
**caractérisé en ce que** l'extrémité libre de la tige (50) est munie d'un moyen pour maintenir ladite extrémité libre de la tige (50) hors du passage fileté (51) lors d'un mouvement de rotation relatif entre lesdites première et deuxième pièces (5B,5A) dans le sens de déserrage du moyen de liaison métallique (50), et
**en ce que** la portion filetée (50F) de la tige (50) présente :
(a) une première partie filetée tournée vers l'extrémité libre de la tige (50) qui en contact avec le filet du passage (51) de la deuxième pièce (5A) assure une force de serrage minimale ou un couple de serrage minimal de sorte qu'une rotation de la première pièce (5B) sur un secteur donné entraîne une rotation de la deuxième pièce (5A) sur le même secteur donné tant que la deuxième pièce (5A) ne touche pas contre au moins une première partie du rail métallique (1) ou avec au moins une première partie du profilé métallique (6) éventuel ou avec au moins un bord de l'ouverture longitudinale ou fenêtre allongée (1F, 6F, 1AF) du rail métallique (1) ou du profilé métallique (6), et
(b) une deuxième partie filetée éloignée de l'extrémité libre de la tige (50) par rapport à la première partie filetée, ladite deuxième partie filetée présentant un filet adapté de manière à ce que le filet de la deuxième partie en contact avec le filet du passage (51) assure une force de serrage ou un couple de serrage inférieur à ladite force de serrage minimale ou ledit couple de serrage minimal, au moins tant que la pièce métallique (4) n'est pas adjacente de sa position solidarisée avec le moyen de liaison métallique (5).

2. Ensemble suivant la revendication 1, **caractérisé en ce que** le filet de la deuxième partie en contact avec le filet du passage (51) assure une force de serrage ou un couple de serrage inférieur à 50% , avantageusement inférieur à 25%, de préférence inférieur à 10% de ladite force de serrage minimale ou ledit couple de serrage minimal.

3. Ensemble suivant l'une quelconque des revendications 1 et 2, **caractérisé en ce que** la tige métallique (50) présente au voisinage de son extrémité libre, une portion creuse au moins tant que la pièce métallique (4) n'est pas adjacente de sa position solidarisée avec le moyen de liaison métallique (5), ladite portion creuse présentant une déformation s'opposant au passage de l'extrémité libre de la tige métallique au travers du passage fileté (51) .

4. Ensemble suivant l'une quelconque des revendications précédentes, **caractérisé en ce que** le pied (52) a une forme allongée avec deux bords (55A,55B) parallèles écartés l'un de l'autre d'une distance (LAM) correspondant à 0,9 à 0,99 fois la largeur de passage (LP) de l'ouverture longitudinale ou de fenêtre allongée (1F,6F,1AF) du rail métallique (1) et du profilé métallique (6) éventuel.

5. Ensemble suivant la revendication précédente, **caractérisé en ce que** le passage fileté (51) du pied (52) est excentré ou le centre de gravité du pied (52) est excentré par rapport à l'axe central B-B de la tige (50).

6. Ensemble suivant l'une quelconque des revendications précédentes, **caractérisé en ce que** ladite autre (5A/5B) des pièces de la paire (5A,5B) présente une tête (5AT) avec un creux ou fente ou un contour (5AT1,5ATC) adapté pour coopérer avec la tête d'un outil de vissage, la face d'appui (5AI) présentant des rainures ou protubérances de blocage (56), pour s'opposer à un desserrage avec un effort inférieur à un effort minimal prédéterminé de ladite autre (5A/5B) des pièces de la paire (5A,5B) lorsque celle-ci prend appui sur une face (41) de la pièce métallique (4) audit rail métallique (1).

7. Ensemble suivant l'une quelconque des revendications précédentes, **caractérisé en ce que** la pièce métallique (4) présente des moyens de positionnement (45) de la pièce métallique (4) par rapport au rail métallique (1), en particulier par rapport à l'ouverture allongée ou la fenêtre allongée (1AF,1F) de celui-ci.

8. Ensemble suivant l'une quelconque des revendications précédentes, **caractérisé en ce que** la tige métallique (50) présente une portion non filetée engagée dans le passage (40) de la pièce métallique (4), ladite portion non filetée présentant une section circulaire correspondant sensiblement à la section du passage (40) de la pièce métallique à solidariser (4), pour éviter sensiblement tout flottement latéral de ladite portion non filetée de la tige métallique (50) par rapport audit passage (40) de la pièce métallique (4).

9. Ensemble suivant l'une quelconque des revendications précédentes, **caractérisé en ce que** le moyen de butée (53,54) comporte :
- une partie plate (53A,54A) destinée à prendre en une première position dite de maintien appui sur une face plane intérieure de la chambre intérieure (2) du rail métallique (1) ou sur une face plane intérieure (6CI) du profilé métallique éventuel (6) ou sur un bord longitudinal de l'ouverture longitudinale de la fenêtre allongée (1F,1AF,6F) du rail métallique (1) ou du profilé métallique éventuel (6), et
- une partie courbe (53B,54B) adaptée lors d'un mouvement de rotation dans un sens de serrage pour glisser le long de ladite face plane intérieure de la chambre intérieure (2) ou le long du bord longitudinal de l'ouverture longitudinale de la fenêtre allongée (1F,1AF,6F) du rail métallique (1) ou du profilé métallique éventuel (6),
dans lequel une portion de la partie plate (53A,54A) adjacente de ladite partie courbe (53B,54B) forme un système type cliquet ou came ou cale avec une force de blocage lors de la rotation de ladite une des pièces de la paire (5A,5B) dans le sens de serrage pour maintenir la partie plate (53A,54A) contre la face plane du rail métallique (1) ou la face plane intérieure (6CI) du profilé métallique éventuel (6) ou le bord d'une fenêtre allongée (1AF,1F,6F), et s'opposer au non maintien de la partie plate (53A,54A) contre la face plane du rail en C (1) ou la face plane intérieure (6CI) du profilé (6) ou le bord d'une fenêtre allongée (1AF,1F,6F), et s'opposer à une rotation de ladite une (5B/5A) des pièces de la paire (5A,5B) dans le sens de desserrage en appliquant une force de rotation inférieure à la force de blocage.

10. Ensemble suivant l'une quelconque des revendications précédentes, **caractérisé en ce que** la tige métallique (50), l' présente une extrémité libre (58) déformée pour former une butée (57) empêchant la tige (50) de sortir complètement hors du passage fileté (51) de la deuxième pièce (5A) du moyen de liaison métallique (5).

11. Ensemble suivant l'une quelconque des revendications précédentes, **caractérisé en ce que** le rail métallique (1) est un rail métallique en C (1) avec des ailes (1B,1C) présentant chacune un retour (1BR,1CR) définissant entre leurs bords libres l'ouverture longitudinale ou la fenêtre allongée longitudinale (1F),
**en ce qu'**il comprend un profilé métallique (6) de section transversale adaptée pour coulisser dans la chambre intérieure (2) du rail (1), ledit profilé (6) présentant une largeur supérieure à la largeur de passage (LP) de l'ouverture longitudinale ou de la fenêtre allongée longitudinale (1F) du rail (1), ledit profilé (6) présentant deux portions longitudinales d'appui (61,62) adaptées pour prendre appui respectivement sur les faces intérieures des retours (1BR,1CR) des ailes (1B,1C) du rail (1), et une portion intermédiaire (63) située entre lesdites portions longitudinales d'appui (61,62) et présentant une série de fenêtres allongées (6F) longitudinales de largeur inférieure à la largeur de l'ouverture longitudinale ou de la fenêtre allongée longitudinale (1F) du rail (1), lesdites fenêtres allongées longitudinales (6F) du profilé (6) étant adaptées pour s'étendre en regard de l'ouverture longitudinale ou de la fenêtre allongée (1F) du rail (1) lorsque les portions longitudinales d'appui (61,62) du profilé (6) prennent appui sur les faces intérieures des retours (1BR,1CR);
**en ce que** la pièce métallique (4) présente au moins deux portions d'appui (48A,48B) adaptées pour venir en contact avec les faces extérieures des retours (1BR,1CR) et une portion intermédiaire (49) présentant le passage (40) pour la tige métallique (50) du moyen de liaison (5),
**en ce que** soit la première pièce (5B) du moyen de liaison (5) comporte la tige métallique (50) qui porte le pied (52) adapté pour passer au travers d'une fenêtre allongée (6F) du profilé métallique (6), ladite tige (50) présentant au voisinage du pied (52) au moins un moyen de butée (53) adapté pour venir en contact avec un bord de la fenêtre allongée longitudinale (6F) du profilé métallique (6) pour assurer une position relative du pied (52) par rapport au profilé métallique (6) lors d'un mouvement de rotation de la deuxième pièce (5A), ou
soit la deuxième pièce (5A) du moyen de liaison (5) comporte le pied (52) adapté pour passer au travers d'une fenêtre allongée (6F) du profilé métallique (6), ledit pied (52) présentant au moins un moyen de butée (53) adapté pour venir en contact avec une face intérieure du rail métallique (1) ou du profilé métallique (6) pour assurer une position relative du pied (52) par rapport au profilé métallique (6) lors d'un mouvement de rotation de la première pièce (5B);
et
**en ce qu'**avantageusement la pièce métallique (4) présente au moins un moyen de positionnement (45) de la pièce métallique (4) par rapport à l'ouverture longitudinale ou la fenêtre longitudinale (1F) du rail (1), au moins un moyen de positionnement (45) étant avantageusement adapté pour s'étendre dans ladite ouverture longitudinale ou fenêtre allongée longitudinale (1F) du rail métallique (1) lorsque les portions d'appui (48A,48B) de la pièce à solidariser (4) sont en contact avec les faces extérieures des retours (1BR,1CR) du rail (1).

12. Ensemble suivant la revendication 11, **caractérisé en ce que** le profilé métallique (6) présente entre les portions longitudinales d'appui (61,62) une gorge (63G) dont le fond forme la portion longitudinale intermédiaire (63) avec la série de fenêtres allongées (6F), et
**en ce qu'**un moyen de positionnement (45) de la pièce métallique (4) est formé par un enfoncement (4E) dont le fond (49) présente le passage (40) pour la tige métallique (50) du moyen de liaison (5), ledit enfoncement (4E) présentant au moins une face inclinée adaptée pour coopérer avec des flancs inclinés de la gorge (63G) lors de l'introduction de l'enfoncement (4E) dans la gorge (63G) du profilé métallique (6) en assurant au moins des points de contact entre la au moins une face inclinée de l'enfoncement (4E) et des flancs inclinés (63F) de la gorge (63G).

13. Ensemble suivant la revendication 11 ou 12, **caractérisé en ce que** le profilé métallique (6) est l'âme d'un rail métallique en C (600) avec avantageusement des retours (600BR,600CR) prolongeant les ailes (600B,600C), et **en ce que** ledit rail en C (600) comprenant le profilé métallique (6) est adapté pour coulisser dans le rail métallique au moins partiellement en C (1) .

14. Ensemble suivant l'une quelconque des revendications précédentes, **caractérisé en ce que** la pièce métallique (4) présente des plis formant des ailes (4L) adaptés pour coiffer au moins partiellement des ailes (1B,1C) du rail métallique (1).

15. Ensemble suivant l'une quelconque des revendications précédentes, **caractérisé en ce que** le rail métallique (1) a une âme (1A) présentant une série de fenêtres allongées (1AF),
**en ce que** la pièce métallique (4) est à solidariser sur l'âme (1A) du profilé en C (1) au niveau d'une fenêtre allongée de la une série de fenêtres allongées (1AF) que présentent l'âme (1A),
**en ce que** le passage (40) de la pièce métallique (4) recevant la tige métallique (50) du moyen de liaison (5) a une forme allongée avec une largeur de passage (LP) et une longueur au moins deux fois supérieure à la largeur de passage,
**en ce que** le pied (52) a une largeur maximale (LAM) inférieure à la largeur de passage (LP) dudit passage (40) et une longueur minimale correspondant au moins à 1,7 fois la largeur de passage, cette longueur étant avantageusement inférieure à la longueur du passage considéré (40), et
**en ce que** le ou au moins un moyen de butée (53,54) est adapté pour que lorsque le moyen de butée est en contact avec un bord allongé d'une fenêtre allongée (1AF) de l'âme (1A), la première pièce (5B) et la deuxième pièce (5A) du moyen de liaison peuvent subir un mouvement de translation relatif, parallèle à l'axe de rotation, lors d'un mouvement de rotation relative entre la première pièce (5B) et la deuxième pièce (5A).

16. Ensemble suivant la revendication 15, **caractérisé en ce que** la pièce métallique (4) est un profilé définissant une gorge longitudinale (4G), dont le fond présente un ou des passages allongés (4F).

## Patentansprüche

1. Anordnung für eine Struktur eines Sektionaltors, insbesondere für eine Führungsstruktur eines Sektionaltors, insbesondere eines Garagensektionaltors, wobei die Anordnung aufweist:
(a) eine Metallschiene (1) mit mindestens einem Kern (1A) und Flügeln (1B, 1C), die an dem Kern (1A) befestigt sind, wobei die Metallschiene (1) eine offene Innenkammer (2) mit einer Innenseite (2I) definiert, die eine Längsöffnung oder ein längliches Fenster (1F) aufweist, das eine Durchgangsbreite (LP) und eine Durchgangslänge hat, die mindestens doppelt so groß ist wie die Durchgangsbreite (LP), wobei die Metallschiene (1) eventuell mit einem Metallprofil (6) verbunden ist, das geeignet ist, um in der Innenkammer (2) zu gleiten, wobei das Metallprofil (6) eine Wand (6I) aufweist, die geeignet ist, um auf der Innenfläche (2I) der Innenkammer (2) aufzuliegen, die die Längsöffnung oder das längliche Fenster (1F) aufweist, wobei die Wand (6I) des Profils (6) mindestens ein längliches Fenster (6F) aufweist, das eine Durchgangsbreite (LP) und eine Durchgangslänge hat, die mindestens doppelt so groß wie die Durchgangsbreite (LP) ist,
(b) ein Metallteil (4), das an der Metallschiene (1), eventuell in Verbindung mit dem möglichen Metallprofil (6), zu befestigen ist, wobei das Metallteil (40) einen Durchgang (40) für einen Metallstab (50) aufweist, wobei das Metallteil (40) in befestigter Position, eventuell mit Zwischenschaltung eines Zwischenteils, mit einer minimalen Haltekraft auf der Metallschiene (1) aufliegt, und
(c) ein metallisches Verbindungsmittel (5) zwischen dem Metallteil (4) und einem Teil der Metallschiene (1), eventuell in Verbindung mit dem Metallprofil (6), das sich in der Innenkammer (2) erstreckt, wobei das metallische Verbindungsmittel (5) in der Klemmposition geeignet ist, um mindestens das Metallteil (4) an einer vorbestimmten Stelle der Metallschiene (1) zu befestigen, wobei das metallische Verbindungsmittel (5) mindestens aufweist:
(a) ein erstes Teil (5B), das einen ersten Körper (5BC) aufweist, der einen Metallstab (50) mit mindestens einem Gewindeabschnitt (50F) trägt, wobei sich der Metallstab (50) im Durchgang (40) des zu befestigenden Metallteils (4) erstreckt, wobei der Metallstab (50) eine Mittelachse B-B aufweist, und
(b) ein zweites Teil (5A), das einen Gewindedurchgang (51) aufweist, der mindestens einen Teil des Gewindeabschnitts des Metallstabs (50) des ersten Teils (5B) aufnimmt, wobei der Metallstab (50) ein freies Ende aufweist, das sich außerhalb des Gewindedurchgangs (51) erstreckt,
wobei sich mindestens ein Abschnitt des Metallteils (4) neben seinem Durchgang (40) zwischen dem ersten Körper (5BC) (der beispielsweise der Kopf einer Schraube ist), der den Metallstab (50) des ersten Teils trägt (5B) trägt, und dem Gewindedurchgang (51) des zweiten Teils (5A) erstreckt,
wobei der erste Teil und der zweite Teil (5A, 5B) durch eine relative Drehbewegung zwischen ihnen um die zentrale Drehachse (B-B) mindestens in Richtung der Mittelachse B-B untereinander beweglich sind, um sie während einer relativen Drehbewegung um die Achse B-B in einer Lockerungsrichtung von der Klemmposition des Verbindungsmittels (5) in eine Nicht-Klemmposition des Verbindungsmittels (5) zu bewegen, in der das metallische Verbindungsmittel (5) und das Metallteil (4) mindestens eine Translationsbewegung relativ zur Metallschiene (1) ausführen können, und während einer relativen Drehbewegung um die Achse B-B in einer Klemmrichtung zwischen einer Nicht-Klemmposition des metallischen Verbindungsmittels (5), in der das metallische Verbindungsmittel (5) und das Metallteil (4) mindestens eine Translationsbewegung relativ zur Metallschiene (1) ausführen können, und der Klemmposition des Verbindungsmittels (5) zu bewegen,
wobei eines (5B/5A) der Teile des Paares von Teilen (5A, 5B), die miteinander zusammenwirken, einen Fuß (52) mit einer Auflagefläche (52A) aufweist, die dazu bestimmt ist, an der Innenseite (2I) der Innenkammer (2), die die Längsöffnung oder das längliche Fenster (1F) aufweist, oder an der Wand (6I) des Profils (6) anzuliegen, während das andere (5A/5B) der Teile des Paares von Teilen (5A, 5B ) eine Auflagefläche (5AI) aufweist, die dazu bestimmt ist, in der Klemmposition des Verbindungsmittels (5) an einer Seite des Metallteils (4) anzuliegen,
wobei der Fuß (52) profiliert ist, um seine Einführung in die offene Innenkammer (2) über die Längsöffnung oder das längliche Fenster (1F) und über das längliche Fenster (6F) des eventuellen Metallprofils (6) zu ermöglichen, wobei der Fuß (52) eine (a) maximale Breite (LAM), die kleiner als die Durchgangsbreite (LP) der Längsöffnung oder des länglichen Fensters (1F) der Metallschiene (1) und kleiner als die Durchgangsbreite des länglichen Fensters ( 6F) des eventuellen Metallprofils (6) ist, und (b) eine minimale Länge (LOM) hat, die mindestens dem 1,7-fachen der Durchgangsbreite (LP) entspricht,
wobei das eine (5B/5A) der Teile des Paares von Teilen (5A, 5B) ein oder mehrere Anschlagmittel (53, 54) aufweist, die die Drehbewegung des Fußes (52) in der offenen Innenkammer (2) zwischen einer ersten Halteposition, für die das oder die Anschlagmittel (53,54) in Kontakt mit mindestens einem ersten Teil der Metallschiene (1) oder mit mindestens einem ersten Teil des eventuellen Metallprofils (6) oder mit mindestens einer Kante der Längsöffnung oder des länglichen Fensters (1F, 6F, 1AF) der Metallschiene (1) und/oder des eventuellen Metallprofils (6) ist/sind, um einer Drehung des einen (5B) der Teile des Paares von Teilen (5A, 5B) während einer relativen Drehbewegung zwischen dem ersten Teil (5B) und dem zweiten Teil (5A) des Paares in der Klemmrichtung des Verbindungsmittels (5) entgegenzuwirken, und mit mindestens einem zweiten Teil der Metallschiene (1) oder mit einem zweiten Teil des eventuellen Metallprofils (6) oder mit mindestens einer Kante der Längsöffnung oder des länglichen Fensters (1F, 6F, 1AF) der Metallschiene (1) und/oder des eventuellen Metallprofils (6) ist/sind, um einer Drehung des einen (5B) der Teile des Paares (5A, 5B) während einer relativen Drehbewegung zwischen dem ersten Teil und dem zweiten Teil des Paares (5A, 5B) in der Richtung des Lösens des Verbindungsmittels (5) entgegenzuwirken,
wobei das Gewinde mindestens eines Teils des Gewindeabschnitts (50F) des Stabes (50) des ersten Teils (5B) und das Gewinde mindestens eines Teils des Gewindedurchgangs (51) des zweiten Teils (5A) geeignet sind, um eine minimale Klemmkraft zwischen ihnen zu gewährleisten,
**dadurch gekennzeichnet, dass** das freie Ende des Stabes (50) mit einem Mittel versehen ist, um das freie Ende des Stabes (50) während einer relativen Drehbewegung zwischen dem ersten und dem zweiten Teil (5B, 5A) in Richtung des Lösens des metallischen Verbindungsmittels (50) außerhalb des Gewindedurchgangs (51) zu halten, und
dadurch, dass der Gewindeabschnitt (50F) des Stabes (50) aufweist:
(a) ein erstes Gewindeteil, das dem freien Ende des Stabes (50) zugewandt ist, das bei Kontakt mit dem Gewinde des Durchgangs (51) des zweiten Teils (5A) eine minimale Klemmkraft oder ein minimales Anzugsmoment derart gewährleistet, dass eine Drehung des ersten Teils (5B) auf einem gegebenen Sektor eine Drehung des zweiten Teils (5A) auf demselben gegebenen Sektor bewirkt, solange der zweite Teil (5A) nicht mindestens einen ersten Teil der Metallschiene (1) oder mindestens einen ersten Teil des eventuellen Metallprofils (6) oder mindestens eine Kante der Längsöffnung oder des länglichen Fensters (1F, 6F, 1AF) der Metallschiene (1) oder des Metallprofils (6) berührt, und
(b) ein zweites Gewindeteil, das in Bezug auf das erste Gewindeteil vom freien Ende des Stabes (50) entfernt ist, wobei das zweite Gewindeteil ein Gewinde aufweist, das derart geeignet ist, dass das Gewinde des zweiten Teils in Kontakt mit dem Gewinde des Durchgangs (51) eine Klemmkraft oder ein Anzugsdrehmoment, das kleiner als die Mindestanzugskraft oder das Mindestanzugsdrehmoment ist, mindestens solange gewährleistet, solange das Metallteil (4) nicht benachbart zu seiner mit dem metallischen Verbindungsmittel (5) fest verbundenen Position ist.

2. Anordnung nach Anspruch 1, **dadurch gekennzeichnet, dass** das Gewinde des zweiten Teils in Kontakt mit dem Gewinde des Durchgangs (51) eine Klemmkraft oder ein Anzugsdrehmoment von weniger als 50 %, vorteilhafterweise von weniger als 25 %, vorzugsweise von weniger als 10 % der minimalen Klemmkraft oder des minimalen Anzugsmoments gewährleistet.

3. Anordnung nach einem der Ansprüche 1 bis 2, **dadurch gekennzeichnet, dass** der Metallstab (50) in der Nähe seines freien Endes mindestens solange einen hohlen Abschnitt aufweist, solange das Metallteil (4) nicht benachbart zu seiner mit dem metallischen Verbindungsmittel (5) fest verbundenen Position ist, wobei der hohle Abschnitt eine Verformung aufweist, die dem Durchgang des freien Endes des Metallstabs durch den Gewindedurchgang (51) entgegenwirkt.

4. Anordnung nach einem der vorhergehenden Ansprüche, **dadurch gekennzeichnet, dass** der Fuß (52) eine längliche Form mit zwei parallelen Kanten (55A, 55B) aufweist, die voneinander um einen Abstand (LAM) beabstandet sind, der dem 0,9- bis 0,99-fachen der Durchgangsbreite (LP) der Längsöffnung oder des länglichen Fensters (1F, 6F, 1AF) der Metallschiene (1) und des eventuellen Metallprofils (6) entspricht.

5. Anordnung nach einem der vorhergehenden Ansprüche, **dadurch gekennzeichnet, dass** der Gewindedurchgang (51) des Fußes (52) exzentrisch ist oder der Schwerpunkt des Fußes (52) exzentrisch in Bezug auf die Mittelachse B-B der Stabes (50) ist.

6. Anordnung nach einem der vorhergehenden Ansprüche, **dadurch gekennzeichnet, dass** das andere (5A/5B) der Teile des Paares (5A, 5B) einen Kopf (5AT) mit einer Ausnehmung oder einem Schlitz oder einer Kontur (SAT1, 5ATC) aufweist, die/der geeignet, um mit dem Kopf eines Schraubwerkzeugs zusammenzuwirken, und wobei die Auflagefläche (5AI) Rillen oder Blockiervorsprünge (56) aufweist, um mit einer Krafteinwirkung, die geringer als eine vorgegebene minimale Krafteinwirkung ist, einem Lockern des anderen (5A/5B) der Teile des Paares (5A/5B) entgegenzuwirken, wenn dieses auf einer Seite (41) des Metallteils (4) auf der Metallschiene (1) aufliegt.

7. Anordnung nach einem der vorhergehenden Ansprüche, **dadurch gekennzeichnet, dass** das Metallteil (4) Mittel zum Positionieren (45) des Metallteils (4) relativ zur Metallschiene (1), insbesondere relativ zu der länglichen Öffnung oder dem länglichen Fenster (1AF,1F) davon aufweist.

8. Anordnung nach einem der vorhergehenden Ansprüche, **dadurch gekennzeichnet, dass** der Metallstab (50) einen Abschnitt ohne Gewinde aufweist, der in den Durchgang (40) des Metallteils (4) eingreift, wobei der Abschnitt ohne Gewinde einen kreisförmigen Querschnitt aufweist, der im Wesentlichen dem Querschnitt des Durchgangs (40) des zu befestigenden Metallteils (4) entspricht, um im Wesentlichen jegliches seitliche Schweben des Abschnitts ohne Gewinde des Metallstabs (50) relativ zum Durchgang (40) des Metallteils (4) zu vermeiden.

9. Anordnung nach einem der vorhergehenden Ansprüche, **dadurch gekennzeichnet, dass** Anschlagmittel (53,54) aufweist:
- einen flachen Teil (53A, 54A), der dazu bestimmt ist, in einer ersten sogenannten Halteposition auf einer flachen Innenseite der Innenkammer (2) der Metallschiene (1) oder auf einer flachen Innenseite (6CI) des eventuellen Metallprofils (6) oder auf einer Längskante der Längsöffnung des länglichen Fensters (1F, 1AF, 6F) der Metallschiene (1) oder des eventuellen Metallprofils (6) aufzuliegen, und
- einen gekrümmten Teil (53B, 54B), der geeignet ist, um bei einer Drehbewegung in Klemmrichtung entlang der flachen Innenseite der Innenkammer (2) oder entlang der Längskante der Längsöffnung des länglichen Fensters (1F,1AF,6F) der Metallschiene (1) oder des eventuellen Metallprofils (6) zu gleiten,
wobei ein Abschnitt des flachen Teils (53A, 54A), der an den gekrümmten Teil (53B, 54B) angrenzt, ein Klinken- oder Nocken- oder Keilsystem mit einer Klemmkraft während der Drehung des einen der Teile des Paares (5A,5B) in Klemmrichtung bildet, um den flachen Teil (53A, 54A) gegen die flache Seite der Metallschiene (1) oder die flache Innenseite (6CI) des eventuellen Metallprofils (6) oder die Kante eines länglichen Fensters (1AF, 1F, 6F) zu halten und zu verhindern, dass der flache Teil (53A, 54A) nicht gegen die flache Seite der C-förmigen Schiene (1) oder die flache Innenseite (6CI) des Profils (6) oder die Kante eines länglichen Fensters (1AF, 1F, 6F) gehalten wird und einer Drehung des einen (5B/5A) der Teile des Paares (5A, 5B) in Lockerungsrichtung durch Anwenden von einer Drehkraft, die geringer als die Klemmkraft ist, entgegenzuwirken.

10. Anordnung nach einem der vorhergehenden Ansprüche, **dadurch gekennzeichnet, dass** der Metallstab (50) ein freies Ende (58) aufweist, das verformt ist, um einen Anschlag (57) zu bilden, der verhindert, dass der Stab (50) vollständig aus dem Gewindedurchgang (51) des zweiten Teils (5A) des metallischen Verbindungsmittels (5) heraustritt.

11. Anordnung nach einem der vorhergehenden Ansprüche, **dadurch gekennzeichnet, dass** die Metallschiene (1) eine C-förmige Metallschiene (1) mit Flügeln (1B, 1C) ist, die jeweils eine Rückführung (1BR, 1CR) aufweisen, die zwischen ihren freien Kanten die Längsöffnung oder das längliche Längslängsfenster (1F) definieren,
dass sie ein Metallprofil (6) mit einem Querschnitt aufweist, der geeignet ist, um in der Innenkammer (2) der Schiene (1) zu gleiten, wobei das Profil (6) eine Breite aufweist, die größer ist als die Durchgangsbreite (LP) der Längsöffnung oder des länglichen Längsfensters (1F) der Schiene (1), wobei das Profil (6) zwei Längsauflageabschnitte (61, 62), die geeignet sind, um jeweils auf den Innenflächen der Rückläufe (1BR, 1CR) der Flügel (1B, 1C) der Schiene (1) aufzuliegen, und einen Zwischenabschnitt (63) aufweist, der sich zwischen den Längsauflageabschnitten (61, 62) befindet und eine Reihe länglicher Längsfenster (6F) mit einer Breite aufweist, die geringer ist als die Breite der Längsöffnung oder des länglichen Längsfensters (1F) der Schiene (1), wobei die länglichen Längsfenster (6F) des Profils (6) geeignet sind, um sich gegenüber der Längsöffnung oder des länglichen Fensters (1F) der Schiene (1) zu erstrecken, wenn die Längsauflageabschnitte (61,62) des Profils (6) auf den Innenflächen der Rückführungen (1BR, 1CR) aufliegen,
dass das Metallteil (4) mindestens zwei Auflageabschnitte (48A, 48B), die geeignet sind, mit den Außenseiten der Rückführungen (1BR, 1CR) in Kontakt zu kommen, und einen Zwischenabschnitt (49) aufweist, der den Durchgang (40) für den Metallstab (50) des Verbindungsmittels (5) darstellt,
dass entweder das erste Teil (5B) des Verbindungsmittels (5) den Metallstab (50) aufweist, der den Fuß (52) trägt, der geeignet ist, um durch ein längliches Fenster (6F) des Metallprofils (6) hindurchzugehen, wobei der Stab (50) in der Nähe des Fußes (52) mindestens ein Anschlagmittel (53) aufweist, das geeignet ist, um mit einer Kante des länglichen Längsfensters (6F) des Metallprofils (6) in Kontakt zu kommen, um eine relative Position des Fußes (52) relativ zum Metallprofil (6) bei einer Drehbewegung des zweiten Teils (5A) zu sicherzustellen oder
das zweite Teil (5A) des Verbindungsmittels (5) den Fuß (52) aufweist, der geeignet ist, um durch ein längliches Fenster (6F) des Metallprofils (6) hindurchzugehen, wobei der Fuß (52) mindestens ein Anschlagmittel (53) aufweist, das geeignet ist, um mit einer Innenseite der Metallschiene (1) oder des Metallprofils (6) in Kontakt zu kommen, um eine relative Position des Fußes (52) relativ zum Metallprofil (6) bei einer Drehbewegung des ersten Teils (5B) sicherzustellen,
und,
dass vorteilhafterweise das Metallteil (4) mindestens ein Mittel zum Positionieren (45) des Metallteils (4) relativ zur Längsöffnung oder zum Längsfenster (1F) der Schiene (1) aufweist, wobei mindestens ein Mittel zum Positionieren (45) vorteilhafterweise geeignet ist, um sich in der Längsöffnung oder dem länglichen Längsfenster (1F) der Metallschiene (1) zu erstrecken, wenn die Auflageabschnitte (48A, 48B) des zu befestigenden Teils (4) in Kontakt mit den Außenseiten der Rückläufe (1BR, 1CR) der Schiene (1) sind.

12. Anordnung nach Anspruch 11, **dadurch gekennzeichnet, dass** das Metallprofil (6) zwischen den Längsauflageabschnitten (61, 62) eine Kehle (63G) aufweist, deren Boden den Zwischenlängsabschnitt (63) mit der Reihe von länglichen Fenstern (6F) bildet, und
dass ein Mittel zum Positionieren (45) des Metallteils (4) durch eine Vertiefung (4E) gebildet ist, deren Boden (49) den Durchgang (40) für den Metallstab (50) des Verbindungsmittels (5) aufweist, wobei die Vertiefung (4E) mindestens eine geneigte Fläche aufweist, die geeignet ist, um mit geneigten Flanken der Kehle (63G) während des Einführens der Vertiefung (4E) in die Kehle (63G) des Metallprofils (6) zusammenzuwirken, indem sie mindestens Kontaktpunkte zwischen der mindestens einen geneigten Fläche der Vertiefung (4E) und den geneigten Flanken (63F) der Kehle (63G) sicherstellt.

13. Anordnung nach Anspruch 11 oder 12, **dadurch gekennzeichnet, dass** das Metallprofil (6) der Kern einer C-förmigen Metallschiene (600) vorteilhafterweise mit Rückläufen (600BR, 600CR), die die Flügel (600B, 600C) verlängern, ist, wobei die C-förmige Schiene (600), die das Metallprofil (6) aufweist, geeignet ist, um in der mindestens teilweise C-förmigen Metallschiene (1) zu gleiten.

14. Anordnung nach einem der vorhergehenden Ansprüche, **dadurch gekennzeichnet, dass** das Metallteil (4) Falten aufweist, die Flügel (4L) bilden, die geeignet sind, um die Flügel (1B, 1C) der Metallschiene (1) mindestens teilweise abzudecken.

15. Anordnung nach einem der vorhergehenden Ansprüche, **dadurch gekennzeichnet, dass** die Metallschiene (1) einen Kern (1A) aufweist, der eine Reihe länglicher Fenster (1AF) aufweist,
dass das Metallteil (4) am Kern (1A) des C-förmigen Profils (1) auf der Höhe eines länglichen Fensters der einen Reihe länglicher Fenster (1AF) zu befestigen ist, die der Kern (1A) aufweist,
dass der Durchgang (40) des Metallteils (4), der den Metallstab (50) des Verbindungsmittels (5) aufnimmt, eine längliche Form mit einer Durchgangsbreite (LP) und einer Länge hat, die mindestens zweimal größer als die Durchgangsbreite ist,
dass der Fuß (52) eine maximale Breite (LAM), die kleiner als die Durchgangsbreite (LP) des Durchgangs (40) ist, und eine minimale Länge hat, die mindestens dem 1,7-fachen der Durchgangsbreite entspricht, wobei diese Länge vorteilhafterweise kleiner ist als die Länge des betrachteten Durchgangs (40) und
dass das mindestens eine Anschlagmittel (53, 54) ausgelegt ist, damit, wenn das Anschlagmittel in Kontakt mit einer länglichen Kante eines länglichen Fensters (1AF) des Kerns (1A) ist, das erste Teil (5B) und das zweite Teil (5A) des Verbindungsmittels bei einer relativen Drehbewegung zwischen dem ersten Teil (5B) und dem zweiten Teil (5A) eine relative Translationsbewegung parallel zur Drehachse ausführen können.

16. Anordnung nach Anspruch 15, **dadurch gekennzeichnet, dass** das Metallteil (4) ein Profil ist, das eine Längskehle (4G) definiert, deren Boden einen länglichen Durchgang oder längliche Durchgänge (4F) aufweist.

## Claims

1. An assembly for a sectional door structure, in particular for a sectional door guide structure, in particular for a garage door, said assembly comprising:
(a) a metal rail (1) with at least one web (1A), and flanges (1B, 1C) attached to said web (1A), said metal rail (1) defining an open inner chamber (2) with an inner face (2I) having a longitudinal opening or an elongated window (1F) having a passage width (LP) and a passage length at least twice the passage width (LP),
in which said metal rail (1) is optionally associated with a metal profile (6) adapted to slide in the inner chamber (2), said metal profile (6) having a wall (6I) adapted to bear on said inner face (2I) of the inner chamber (2) having the longitudinal opening or the elongate window (1F), said wall (6I) of the profile (6) having at least one elongate window (6F) having a passage width (LP) and a passage length at least twice greater than the passage width (LP);
(b) a metal part (4) to be fastened to said metal rail (1), possibly in association with said optional metal profile (6), said metal part (40) having a passage (40) for a metal rod (50), said metal part (40) in the fastened position bearing, possibly with the interposition of an intermediate part, on said metal rail (1) with a minimum holding force, and
(c) a metal connection means (5) between the metal part (4) and a part of said metal rail (1), possibly in association with said metal profile (6) extending into the inner chamber (2), said metal connection means (5) in the clamping position being adapted to secure at least said metal part (4) at a predetermined location of said metal rail (1), said metal connection means (5) comprising at least :
(a) a first part (5B) having a first body (5BC) carrying a metal rod (50) with at least one threaded portion (50F), said metal rod (50) extending into the passage (40) of the metal part to be joined (4), said metal rod (50) having a central axis B-B, and
(b) a second part (SA) having a threaded passage (51) receiving at least part of the threaded portion of said metal rod (50) of said first part (5B), said metal rod (50) having a free end extending out of the threaded passage (51),
wherein at least a portion of the metal part (4) adjacent its passage (40) extends between said first body (5BC) (which is for example the head of a screw) carrying the metal rod (50) of the first part (5B) and said threaded passage (51) of the second part (5A)
said first and second parts (5A, 5B) being movable relative to one another at least in the direction of the central axis B-B by a relative rotational movement relative to one another about the central axis of rotation (B-B) in order to move them during a relative rotational movement about the axis B-B in a loosening direction from the clamping position of the connecting means (5) to a non-clamping position of the connecting means (5), in which the metal connecting means (5) and the metal part (4) can at least undergo a translational movement relative to the metal rail (1), and in a relative rotational movement about the B-B axis in a clamping direction between a non-clamping position of the metal connecting means (5), in which the metal connecting means (5) and the metal part (4) can at least undergo a translational movement relative to the metal rail (1), and the clamping position of the connecting means (5),
in which one (5B/5A) of the parts of the pair of parts (5A, 5B) cooperating with each other has a foot (52) with a bearing face (52A) intended to bear on the inner face (2I) of the inner chamber (2) having the longitudinal opening or the elongate window (1F) or on the wall (6I) of the profile (6), while the other (5A/5B) of the pair of parts (5A, 5B) has a bearing face (5AI) intended to bear on a face of the metal part (4) in the clamping position of said connecting means (5),
in which said foot (52) is profiled to enable it to be introduced into the open interior chamber (2) via the longitudinal opening or the elongate window (1F) and via the elongate window (6F) of the optional metal profile (6), said foot (52) having (a) a maximum width (LAM) less than the passage width (LP) of the longitudinal opening or elongate window (1F) of the metal rail (1) and less than the passage width of the elongate window (6F) of the metal profile (6), if any, and (b) a minimum length (LOM) corresponding to at least 1.7 times the passage width (LP),
the said one (5B/5A) of the parts of the pair of parts (5A, 5B) comprising one or more stop means (53, 54) limiting the rotational movement of the said foot (52) in the open interior chamber (2) between a first holding position in which the stop means (53, 54) is/are in contact with at least a first part of the metal rail (1) or with at least a first part of the metal profile (6), if any, or with at least one edge of the longitudinal opening or elongate window (1F, 6F, 1AF) of the metal rail (1) and/or of the metal profile (6), if any, in order to oppose rotation of the said one (5B) of the said parts of the pair (5A, 5B) during a relative rotational movement between the first part (5B) and the second part (SA) of said pair in the direction of tightening of the connecting means (5), and with at least a second part of the metal rail (1) or with a second part of the optional metal profile (6) or with at least one edge of the longitudinal opening or elongate window (1F, 6F, 1AF) of the metal rail (1) and/or of the optional metal profile (6), in order to oppose rotation of the said one (5B) of the said parts of the pair (5A, 5B) during a relative rotational movement between the first part and the second part of the pair (5A, 5B) in the direction of release of the connecting means (5),
wherein the thread of at least part of the threaded portion (50F) of the rod (50) of the first part (5B) and the thread of at least part of the threaded passage (51) of the second part (SA) are adapted to provide a minimum clamping force therebetween,
**characterised in that** the free end of the rod (50) is provided with means for maintaining said free end of the rod (50) out of the threaded passage (51) during a relative rotational movement between said first and second parts (5B, 5A) in the direction of loosening of the metal connecting means (50), and
**in that** the threaded portion (50F) of the rod (50) has :
(a) a first threaded part turned towards the free end of the rod (50) which, in contact with the thread of the passage (51) of the second part (5A), ensures a minimum clamping force or a minimum clamping torque so that a rotation of the first part (5B) over a given sector leads to a rotation of the second part (5A) over the same given sector as long as the second part (5A) does not touch at least a first part of the metal rail (1) or at least a first part of the optional profile (6) or at least one edge of the longitudinal opening or elongate window (1F, 6F, 1AF) of the metal rail (1) or the metal profile (6), and
(b) a second threaded portion remote from the free end of the rod (50) with respect to the first threaded portion, said second threaded portion having a thread adapted so that the thread of the second portion in contact with the thread of the passage (51) ensures a clamping force or a clamping torque less than said minimum clamping force or said minimum clamping torque, at least as long as the metal part (4) is not adjacent to its integral position with the metal connecting means (5).

2. Assembly according to claim 1, **characterised in that** the thread of the second part in contact with the thread of the passage (51) ensures a clamping force or a clamping torque of less than 50%, advantageously less than 25%, preferably less than 10% of said minimum clamping force or said minimum clamping torque.

3. Assembly according to any one of claims 1 and 2, **characterised in that** the metal rod (50) has, in the vicinity of its free end, a hollow portion at least as long as the metal part (4) is not adjacent to its position secured to the metal connecting means (5), said hollow portion having a deformation opposing the passage of the free end of the metal rod through the threaded passage (51).

4. Assembly according to any one of the preceding claims, **characterised in that** the foot (52) has an elongate shape with two parallel edges (55A, 55B) spaced apart from each other by a distance (LAM) corresponding to 0.9 to 0.99 times the passage width (LP) of the elongate longitudinal or window opening (1F, 6F, 1AF) of the metal rail (1) and of the optional profile (6).

5. Assembly according to the preceding claim, **characterised in that** the threaded passage (51) of the foot (52) is eccentric or the centre of gravity of the foot (52) is eccentric with respect to the central axis B-B of the rod (50).

6. Assembly according to any one of the preceding claims, **characterised in that** the said other (5A/5B) of the parts of the pair (5A, 5B) has a head (5AT) with a hollow or slot or a contour (5AT1, 5ATC) adapted to cooperate with the head of a screwing tool, and the abutment face (5AI) having locking grooves or protuberances (56), to oppose loosening with a force less than a predetermined minimum force of the said other (5A/5B) of the parts of the pair (5A, 5B) when the latter abuts on a face (41) of the metal part (4) of the said metal rail (1).

7. Assembly according to any one of the preceding claims, **characterised in that** the metal part (4) has means (45) for positioning the metal part (4) relative to the metal rail (1), in particular relative to the elongate opening or elongate window (1AF, 1F) thereof.

8. Assembly according to any one of the preceding claims, **characterised in that** the metal rod (50) has an unthreaded portion engaged in the passage (40) of the metal part (4), said unthreaded portion having a circular cross-section corresponding substantially to the cross-section of the passage (40) of the metal part to be secured (4), to substantially prevent any lateral floating of said unthreaded portion of the metal rod (50) with respect to said passage (40) of the metal part (4).

9. An assembly according to any one of the preceding claims, **characterised in that** the stop means (53, 54) comprises:
- a flat part (53A, 54A) intended, in a first position known as the holding position, to bear on an inner flat face of the inner chamber (2) of the metal rail (1) or on an inner flat face (6CI) of the optional profile (6) or on a longitudinal edge of the longitudinal opening of the elongate window (1F, 1AF, 6F) of the metal rail (1) or of the optional profile (6), and
- a curved part (53B, 54B) adapted during a rotational movement in a tightening direction to slide along said inner flat face of the inner chamber (2) or along the longitudinal edge of the longitudinal opening of the elongate window (1F, 1AF, 6F) of the metal rail (1) or of the optional metal profile (6),
in which a portion of the flat part (53A, 54A) adjacent to the said curved part (53B, 54B) forms a pawl or cam or wedge type system with a clamping force on rotation of the said one of the parts of the pair (5A, 5B) in the tightening direction to hold the flat part (53A, 54A) against the flat face of the metal rail (1) or the inner flat face (6CI) of the optional metal profile (6) or the edge of an elongate window (1AF, 1F,6F), and opposing the non-holding of the flat part (53A,54A) against the flat face of the C rail (1) or the inner flat face (6CI) of the profile (6) or the edge of an elongate window (1AF,1F,6F), and opposing rotation of the said one (5B/5A) of the parts of the pair (5A,5B) in the loosening direction by applying a rotational force less than the locking force.

10. Assembly according to any one of the preceding claims, **characterised in that** the metal rod (50) has a free end (58) deformed to form a stop (57) preventing the rod (50) from coming completely out of the threaded passage (51) of the second part (5A) of the metal connecting means (5).

11. Assembly according to any one of the preceding claims, **characterised in that** the metal rail (1) is a C-shaped metal rail (1) with wings (1B, 1C) each having a return (1BR, 1CR) defining between their free edges the longitudinal opening or the longitudinal elongate window (1F),
**in that** it comprises a metal profile (6) with a cross-section suitable for sliding in the inner chamber (2) of the rail (1), the said profile (6) having a width greater than the passage width (LP) of the longitudinal opening or of the longitudinal elongate window (1F) of the rail (1), the said profile (6) having two longitudinal bearing portions (61, 62) suitable for bearing respectively on the inner faces of the returns (1BR, 1CR) of the flanges (1B, 1C) of the rail (1), and an intermediate portion (63) located between said longitudinal bearing portions (61, 62) and having a series of longitudinal elongate windows (6F) of a width less than the width of the longitudinal opening or of the longitudinal elongate window (1F) of the rail (1), said longitudinal elongate windows (6F) of the profile (6) being adapted to extend opposite the longitudinal opening or the elongate window (1F) of the rail (1) when the longitudinal bearing portions (61, 62) of the profile (6) bear on the inner faces of the returns (1BR, 1CR);
**in that** the metal part (4) has at least two bearing portions (48A, 48B) adapted to come into contact with the outer faces of the returns (1BR, 1CR) and an intermediate portion (49) having the passage (40) for the metal rod (50) of the connecting means (5),
**in that** either the first part (5B) of the connecting means (5) comprises the metal rod (50) which carries the foot (52) adapted to pass through an elongate window (6F) of the metal profile (6), said rod (50) having in the vicinity of the foot (52) at least one stop means (53) adapted to come into contact with an edge of the longitudinal elongate window (6F) of the metal profile (6) to ensure a relative position of the foot (52) with respect to the metal profile (6) during a rotational movement of the second part (5A),
or the second part (5A) of the connecting means (5) comprises the foot (52) adapted to pass through an elongate window (6F) of the metal profile (6), said foot (52) having at least one stop means (53) adapted to come into contact with an inner face of the metal rail (1) or of the metal profile (6) to ensure a relative position of the foot (52) with respect to the metal profile (6) during a rotational movement of the first part (5B);
and
**in that** advantageously the metal part (4) has at least one means (45) for positioning the metal part (4) relative to the longitudinal opening or longitudinal window (1F) of the rail (1), at least one positioning means (45) advantageously being adapted to extend into said longitudinal opening or longitudinal elongate window (1F) of the metal rail (1) when the bearing portions (48A, 48B) of the part to be secured (4) are in contact with the outer faces of the returns (1BR, 1CR) of the rail (1).

12. Assembly according to claim 11, **characterised in that** the metal profile (6) has, between the longitudinal bearing portions (61, 62), a groove (63G), the bottom of which forms the intermediate longitudinal portion (63) with the series of elongate windows (6F), and
**in that** a means (45) of positioning the metal part (4) is formed by a recess (4E), the bottom (49) of which has the passage (40) for the metal rod (50) of the connecting means (5), said recess (4E) having at least one inclined face adapted to cooperate with inclined flanks of the groove (63G) when the recess (4E) is introduced into the groove (63G) of the metal profile (6) by ensuring at least points of contact between the at least one inclined face of the recess (4E) and inclined flanks (63F) of the groove (63G).

13. Assembly according to claim 11 or 12, **characterised in that** the metal profile (6) is the web of a C-shaped metal rail (600) advantageously with returns (600BR, 600CR) extending the flanges (600B, 600C), and **in that** the said C-shaped rail (600) comprising the metal profile (6) is adapted to slide in the at least partially C-shaped metal rail (1).

14. Assembly according to any one of the preceding claims, **characterised in that** the metal part (4) has folds forming wings (4L) adapted to cover at least partially the wings (1B, 1C) of the metal rail (1).

15. Assembly according to any one of the preceding claims, **characterised in that** the metal rail (1) has a web (1A) having a series of elongate windows (1AF),
**in that** the metal part (4) is to be secured to the web (1A) of the C-profile (1) at an elongate window of the one series of elongate windows (1AF) which the web (1A) has,
**in that** the passage (40) of the metal part (4) receiving the metal rod (50) of the connecting means (5) has an elongate shape with a passage width (LP) and a length at least twice as great as the passage width,
**in that** the foot (52) has a maximum width (LAM) less than the passage width (LP) of the said passage (40) and a minimum length corresponding to at least 1.7 times the passage width, this length advantageously being less than the length of the passage in question (40), and
**in that** the or at least one abutment means (53, 54) is adapted so that when the abutment means is in contact with an elongate edge of an elongate window (1AF) of the core (1A), the first part (5B) and the second part (5A) of the connecting means can undergo a relative translational movement, parallel to the axis of rotation, during a relative rotational movement between the first part (5B) and the second part (5A).

16. Assembly according to claim 15, **characterised in that** the metal part (4) is a profile defining a longitudinal groove (4G), the bottom of which has one or more elongate passages (4F).
